(19) Europäisches Patentamt
European Patent Office
Office européen des brevets

(11) EP 2 638 118 B1

(12) # EUROPÄISCHE PATENTSCHRIFT

(45) Veröffentlichungstag und Bekanntmachung des Hinweises auf die Patenterteilung:
**06.12.2017 Patentblatt 2017/49**

(21) Anmeldenummer: **11779146.7**

(22) Anmeldetag: **27.10.2011**

(51) Int Cl.:
***C08F 8/44*** (2006.01) ***C09J 153/02*** (2006.01)

(86) Internationale Anmeldenummer:
**PCT/EP2011/068821**

(87) Internationale Veröffentlichungsnummer:
**WO 2012/062586 (18.05.2012 Gazette 2012/20)**

(54) **KLEBMASSE UND VERFAHREN ZUR KAPSELUNG EINER ELEKTRONISCHEN ANORDNUNG**
ADHESIVE COMPOUND AND METHOD FOR ENCAPSULATING AN ELECTRONIC ASSEMBLY
MASSE ADHÉSIVE ET PROCÉDÉ POUR ENCAPSULER UN DISPOSITIF ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2010 DE 102010043866**

(43) Veröffentlichungstag der Anmeldung:
**18.09.2013 Patentblatt 2013/38**

(73) Patentinhaber: **tesa SE**
**22848 Norderstedt (DE)**

(72) Erfinder:
- **KRAWINKEL, Thorsten**
  **22457 Hamburg (DE)**
- **KEITE-TELGENBÜSCHER, Klaus**
  **22529 Hamburg (DE)**
- **GRÜNAUER, Judith**
  **22117 Hamburg (DE)**
- **ELLINGER, Jan**
  **20257 Hamburg (DE)**
- **STEEN, Alexander**
  **53175 Bonn (DE)**

(56) Entgegenhaltungen:
**EP-A2- 2 200 105** **WO-A1-99/67330**
**WO-A1-2006/113180** **US-A- 5 500 464**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine Klebmasse für die Kapselung einer elektronischen Anordnung und ein Verfahren für deren Anwendung.

(Opto-)elektronische Anordnungen werden immer häufiger in kommerziellen Produkten verwendet oder stehen kurz vor der Markteinführung. Derartige Anordnungen umfassen anorganische oder organische elektronische Strukturen, beispielsweise organische, metallorganische oder polymere Halbleiter oder auch Kombinationen dieser. Diese Anordnungen und Produkte sind je nach gewünschter Anwendung starr oder flexibel ausgebildet, wobei eine zunehmende Nachfrage nach flexiblen Anordnungen besteht. Die Herstellung derartiger Anordnungen erfolgt beispielsweise durch Druckverfahren wie Hochdruck, Tiefdruck, Siebdruck, Flachdruck oder wie auch so genanntes "non impact printing" wie etwa Thermotransferdruck Tintenstrahldruck oder Digitaldruck. Vielfach werden aber auch Vakuumverfahren wie zum Beispiel Chemical Vapor Deposition (CVD), Physical Vapor Deposition (PVD), plasmaunterstützte chemische oder physikalische Depositionsverfahren (PECVD), Sputtern, (Plasma-)Ätzen oder Bedampfung verwendet, wobei die Strukturierung in der Regel durch Masken erfolgt.

Als Beispiele für bereits kommerzielle oder in ihrem Marktpotential interessante (opto-)elektronische Anwendungen seien hier elektrophoretische oder elektrochrome Aufbauten oder Displays, organische oder polymere Leuchtdioden (OLEDs oder PLEDs) in Anzeige- und Display-Vorrichtungen oder als Beleuchtung genannt, Elektrolumineszenzlampen, lichtemittierende elektrochemische Zellen (LEECs), organische Solarzellen, bevorzugt Farbstoff- oder Polymersolarzellen, anorganische Solarzellen, bevorzugt Dünnschichtsolarzellen, insbesondere auf der Basis von Silizium, Germanium, Kupfer, Indium und Selen, organische Feldeffekt-Transistoren, organische Schaltelemente, organische optische Verstärker, organische Laserdioden, organische oder anorganische Sensoren oder auch organische- oder anorganischbasierte RFID-Transponder angeführt.

Als technische Herausforderung für die Realisierung ausreichender Lebensdauer und Funktion von (opto-)elektronischen Anordnungen im Bereich der anorganischen und/oder organischen (Opto-)Elektronik, ganz besonders aber im Bereich der organischen (Opto-) Elektronik ist ein Schutz der darin enthaltenen Komponenten vor Permeanten zu sehen. Permeanten können eine Vielzahl von niedermolekularen organischen oder anorganischen Verbindungen sein, insbesondere Wasserdampf und Sauerstoff.

Eine Vielzahl von (opto-)elektronischen Anordnungen im Bereich der anorganischen und/oder organischen (Opto-)Elektronik, ganz besonders bei Verwendung von organischen Rohstoffen, ist sowohl gegen Wasserdampf als auch gegen Sauerstoff empfindlich, wobei für viele Anordnungen das Eindringen von Wasser oder Wasserdampf als größeres Problem eingestuft wird. Während der Lebensdauer der elektronischen Anordnung ist deshalb ein Schutz durch eine Verkapselung erforderlich, da andernfalls die Leistung über den Anwendungszeitraum nachlässt. So können sich beispielsweise durch eine Oxidation der Bestandteile etwa bei lichtemittierenden Anordnungen wie Elektrolumineszenz-Lampen (EL-Lampen) oder organischen Leuchtdioden (OLED) die Leuchtkraft, bei elektrophoretischen Displays (EP-Displays) der Kontrast oder bei Solarzellen die Effizienz innerhalb kürzester Zeit drastisch verringern.

Bei der anorganischen und/oder organischen (Opto-)Elektronik, insbesondere bei der organischen (Opto-)Elektronik, gibt es besonderen Bedarf für flexible Klebelösungen, die eine Permeationsbarriere für Permeanten wie Sauerstoff und/oder Wasserdampf darstellen. Daneben gibt es eine Vielzahl von weiteren Anforderungen für derartige (opto)-elektronische Anordnungen. Die flexiblen Klebelösungen sollen daher nicht nur eine gute Haftung zwischen zwei Substraten erzielen, sondern zusätzlich Eigenschaften wie hohe Scherfestigkeit und Schälfestigkeit, chemische Beständigkeit, Alterungsbeständigkeit, hohe Transparenz, einfache Prozessierbarkeit sowie hohe Flexibilität und Biegsamkeit erfüllen.

Ein nach dem Stand der Technik gängiger Ansatz ist deshalb, die elektronische Anordnung zwischen zwei für Wasserdampf und Sauerstoff undurchlässige Substrate zu legen. Anschließend erfolgt dann eine Versiegelung an den Rändern. Für unflexible Aufbauten werden Glas oder Metallsubstrate verwendet, die eine hohe Permeationsbarriere bieten, aber sehr anfällig für mechanische Belastungen sind. Ferner verursachen diese Substrate eine relativ große Dicke der gesamten Anordnung. Im Falle von Metallsubstraten besteht zudem keine Transparenz. Für flexible Anordnungen hingegen kommen Flächensubstrate wie transparente oder nicht transparente Folien zum Einsatz, die mehrlagig ausgeführt sein können. Hierbei können sowohl Kombinationen aus verschieden Polymeren, als auch anorganische oder organische Schichten verwendet werden. Der Einsatz solcher Flächensubstrate ermöglicht einen flexiblen, äußerst dünnen Aufbau. Dabei sind für die verschiedenen Anwendungen unterschiedlichste Substrate wie zum Beispiel Folien, Gewebe, Vliese und Papiere oder Kombinationen daraus möglich.

Um eine möglichst gute Versiegelung zu erzielen, werden spezielle Barriereklebemassen verwendet. Eine gute Klebemasse für die Versiegelung von (opto-)elektronischen Bauteilen weist eine geringe Permeabilität gegen Sauerstoff und insbesondere gegen Wasserdampf auf, hat eine ausreichende Haftung auf der Anordnung und kann gut auf diese auffließen. Eine geringe Haftung auf der Anordnung verringert die Barrierewirkung an der Grenzfläche, wodurch ein Eintritt von Sauerstoff und Wasserdampf unabhängig von den Eigenschaften der Klebmasse ermöglicht wird. Nur wenn der Kontakt zwischen Masse und Substrat durchgängig ist, sind die Masseeigenschaften der bestimmende Faktor für die Barrierewirkung der Klebemasse.

Zur Charakterisierung der Barrierewirkung werden üblicherweise die Sauerstofftransmissionsrate OTR (Oxygen Transmission Rate) sowie die Wasserdampftransmissionsrate WVTR (Water Vapor Transmission Rate) angegeben. Die jeweilige Rate gibt dabei den flächen- und zeitbezogenen Fluss von Sauerstoff beziehungsweise Wasserdampf durch einen Film unter spezifischen Bedingungen von Temperatur und Partialdruck sowie gegebenenfalls weiterer Messbedingungen wie relativer Luftfeuchtigkeit an. Je geringer diese Werte sind, desto besser ist das jeweilige Material zur Kapselung geeignet. Die Angabe der Permeation basiert dabei nicht allein auf den Werten für WVTR oder OTR, sondern beinhaltet immer auch eine Angabe zur mittleren Weglänge der Permeation wie zum Beispiel die Dicke des Materials oder eine Normalisierung auf eine bestimmte Weglänge.

Die Permeabilität P ist ein Maß für die Durchlässigkeit eines Körpers für Gase und/oder Flüssigkeiten. Ein niedriger P-Wert kennzeichnet eine gute Barrierewirkung. Die Permeabilität P ist ein spezifischer Wert für ein definiertes Material und einen definierten Permeanten unter stationären Bedingungen bei bestimmter Permeationsweglänge, Partialdruck und Temperatur. Die Permeabilität P ist das Produkt aus Diffusions-Term D und Löslichkeits-Term S:

$$P = D * S$$

Der Löslichkeitsterm S beschreibt vorwiegend die Affinität der Barriereklebemasse zum Permeanten. Im Fall von Wasserdampf wird beispielsweise ein geringer Wert für S von hydrophoben Materialen erreicht. Der Diffusionsterm D ist ein Maß für die Beweglichkeit des Permeanten im Barrierematerial und ist direkt abhängig von Eigenschaften wie der Molekülbeweglichkeit oder dem freien Volumen. Oft werden bei stark vernetzten oder hochkristallinen Materialen für D relativ niedrige Werte erreicht. Hochkristalline Materialien sind jedoch in der Regel weniger transparent und eine stärkere Vernetzung führt zu einer geringeren Flexibilität. Die Permeabilität P steigt üblicherweise mit einer Erhöhung der molekularen Beweglichkeit an, etwa auch wenn die Temperatur erhöht oder der Glasübergangspunkt überschritten wird.

Ansätze, um die Barrierewirkung einer Klebemasse zu erhöhen, müssen die beiden Parameter D und S insbesondere berücksichtigen im Hinblick auf den Einfluss auf die Durchlässigkeit von Wasserdampf und Sauerstoff. Zusätzlich zu diesen chemischen Eigenschaften müssen auch Auswirkungen physikalischer Einflüsse auf die Permeabilität bedacht werden, insbesondere die mittlere Permeationsweglänge und Grenzflächeneigenschaften (Auffließverhalten der Klebemasse, Haftung). Die ideale Barriereklebemasse weist geringe D-Werte und S-Werte bei sehr guter Haftung auf dem Substrat auf.

Ein geringer Löslichkeits-Term S allein ist meist unzureichend, um gute Barriereeigenschaften zu erreichen. Ein klassisches Beispiel dafür sind insbesondere Siloxan-Elastomere. Die Materialien sind äußerst hydrophob (kleiner Löslichkeits-Term), weisen aber durch ihre frei drehbare Si-O Bindung (großer Diffusions-Term) eine vergleichsweise geringe Barrierewirkung gegen Wasserdampf und Sauerstoff auf. Für eine gute Barrierewirkung ist also eine gute Balance zwischen Löslichkeits-Term S und Diffusions-Term D notwendig.

Hierfür wurden bisher vor allem Flüssigklebstoffe und Adhäsive auf Basis von Epoxiden verwendet (WO 98/21287 A1; US 4,051,195 A; US 4,552,604 A). Diese haben durch eine starke Vernetzung einen geringen Diffusionsterm D. Ihr Haupteinsatzgebiet sind Randverklebungen starrer Anordnungen, aber auch mäßig flexible Anordnungen. Eine Aushärtung erfolgt thermisch oder mittels UV-Strahlung. Eine vollflächige Verklebung ist aufgrund des durch die Aushärtung auftretenden Schrumpfes kaum möglich, da es beim Aushärten zu Spannungen zwischen Kleber und Substrat kommt, die wiederum zur Delaminierung führen können.

Der Einsatz dieser flüssigen Klebstoffe birgt eine Reihe von Nachteilen. So können niedermolekulare Bestandteile (VOC - volatile organic compound) die empfindlichen elektronischen Strukturen der Anordnung schädigen und den Umgang in der Produktion erschweren. Der Klebstoff muss aufwändig auf jeden einzelnen Bestandteil der Anordnung aufgebracht werden. Die Anschaffung von teuren Dispensern und Fixiereinrichtungen ist notwendig, um eine genaue Positionierung zu gewährleisten. Die Art der Auftragung verhindert zudem einen schnellen kontinuierlichen Prozess und auch durch den anschließend erforderlichen Laminationsschritt kann durch die geringe Viskosität das Erreichen einer definierten Schichtdicke und Verklebungsbreite in engen Grenzen erschwert sein.

Des Weiteren weisen solche hochvernetzten Klebstoffe nach dem Aushärten nur noch eine geringe Flexibilität auf. Der Einsatz von thermisch-vernetzenden Systemen wird im niedrigen Temperaturbereich oder bei 2-Komponenten-Systemen durch die Topfzeit begrenzt, also die Verarbeitungszeit bis eine Vergelung stattgefunden hat. Im hohen Temperaturbereich und insbesondere bei langen Reaktionszeiten begrenzen wiederum die empfindlichen (opto-)elektronischen Strukturen die Verwendbarkeit derartiger Systeme - die maximal anwendbaren Temperaturen bei (opto-)elektronischen Strukturen liegen manchmal nur bei 60 °C, da bereits ab dieser Temperatur eine Vorschädigung eintreten kann. Insbesondere flexible Anordnungen, die organische Elektronik enthalten und mit transparenten Polymerfolien oder Verbunden aus Polymerfolien und anorganischen Schichten gekapselt sind, setzen hier enge Grenzen. Dies gilt auch für Laminierschritte unter großem Druck. Um eine verbesserte Haltbarkeit zu erreichen, ist hier ein Verzicht auf

einen temperaturbelastenden Schritt und eine Laminierung unter geringerem Druck von Vorteil.

Alternativ zu den thermisch härtbaren Flüssigklebstoffen werden mittlerweile vielfach auch strahlenhärtende Klebstoffe eingesetzt (US 2004/0225025 A1). Die Verwendung von strahlenhärtenden Klebstoffen vermeidet eine lange andauernde Wärmebelastung der elektronischen Anordnung. Jedoch kommt es durch die Bestrahlung zu einer kurzfristigen punktuellen Erhitzung der Anordnung, da neben einer UV-Strahlung in der Regel auch ein sehr hoher Anteil an IR-Strahlung emittiert wird. Weitere oben genannte Nachteile von Flüssigklebstoffen wie VOC, Schrumpf, Delamination und geringe Flexibilität bleiben ebenfalls erhalten. Probleme können durch zusätzliche flüchtige Bestandteile oder Spaltprodukte aus den Photoinitiatoren oder Sensitizern entstehen. Zudem muss die Anordnung durchlässig für UV-Licht sein.

Da Bestandteile insbesondere organischer Elektronik und viele der eingesetzten Polymere häufig empfindlich gegen UV-Belastung sind, ist ein länger andauernder Außeneinsatz nicht ohne weitere zusätzliche Schutzmaßnahmen, etwa weitere Deckfolien möglich. Diese können bei UV-härtenden Klebesystemen erst nach der UV-Härtung aufgebracht werden, was die Komplexität der Fertigung und die Dicke der Anordnung zusätzlich erhöht.

Die US 2006/0100299 A1 offenbart ein UV-härtbares Haftklebeband zur Kapselung einer elektronischen Anordnung. Das Haftklebeband umfasst eine Klebemasse auf Basis einer Kombination eines Polymers mit einem Erweichungspunkt von größer 60 °C, eines polymerisierbaren Epoxidharzes mit einem Erweichungspunkt von unter 30 °C und eines Photoinitiator. Bei den Polymeren kann es sich um Polyurethan, Polyisobutylen, Polyacrylnitril, Polyvinylidenchlorid, Poly(meth)acrylat oder Polyester, insbesondere aber um ein Acrylat handeln. Des Weiteren sind Klebharze, Weichmacher oder Füllstoffe enthalten.

Acrylatmassen haben eine sehr gute Beständigkeit gegenüber UV-Strahlung und verschiedenen Chemikalien, besitzen aber sehr unterschiedliche Klebkräfte auf verschiedenen Untergründen. Während die Klebkraft auf polaren Untergründen wie Glas oder Metall sehr hoch ist, ist die Klebkraft auf unpolaren Untergründen wie beispielsweise Polyethylen oder Polypropylen eher gering. Hier besteht die Gefahr der Diffusion an der Grenzfläche in besonderem Maße. Zudem sind diese Massen sehr polar, was eine Diffusion insbesondere von Wasserdampf, trotz nachträglicher Vernetzung, begünstigt. Durch den Einsatz polymerisierbarer Epoxidharze wird diese Tendenz weiter verstärkt.

Haftklebebänder benötigen in der Regel durch die relativ hochmolekularen Polymere im Gegensatz zu Flüssigklebstoffen für eine gute Benetzung und Haftung auf der Oberfläche eine gewisse Zeit, ausreichenden Druck und eine gute Balance zwischen viskosem Anteil und elastischen Anteil.

Die WO 2007/087281 A1 offenbart ein transparentes flexibles Haftklebeband auf Basis von Polyisobutylen (PIB) für elektronische Anwendungen, insbesondere OLED. Dabei wird Polyisobutylen mit einem Molekulargewicht von mehr als 500.000 g/mol und ein hydriertes cyclisches Harz verwendet. Optional ist der Einsatz eines photopolymerisierbaren Harzes und eines Photoinitiators möglich.

Klebemassen auf der Basis von Polyisobutylen weisen aufgrund ihrer geringen Polarität eine gute Barriere gegen Wasserdampf auf, haben aber selbst bei hohen Molekulargewichten eine relativ geringe Kohäsivität, weshalb sie bei erhöhten Temperaturen häufig eine geringe Scherfestigkeit aufweisen. Der Anteil an niedermolekularen Bestandteilen kann nicht beliebig reduziert werden, da sonst die Haftung deutlich verringert wird und die Grenzflächenpermeation zunimmt. Bei Einsatz eines hohen Anteils an funktionellen Harzen, der aufgrund der sehr geringen Kohäsion der Masse notwendig ist, wird die Polarität der Masse wieder erhöht und damit der Löslichkeits-Term vergrößert.

Beschrieben sind weiterhin Barriereklebemassen auf der Basis von Styrolblockcopolymeren und möglichst hydrierten Harzen (siehe DE 10 2008 047 964 A1).

Durch die Bildung von zumindest zwei Domänen innerhalb des Blockcopolymers erhält man zusätzlich eine sehr gute Kohäsion bei Raumtemperatur und gleichzeitig verbesserte Barriereeigenschaften.

Sowohl die Haftklebmassen auf Basis von Polyisobutylen als auch solche auf Basis von hydrierten Styrolblockcopolymeren zeigen einen bedeutenden Nachteil. Bei einer Verklebung zwischen zwei Folien, die mit einer Barriereschicht versehen sind, zum Beispiel zwei PET-Folien mit einer SiOx-Beschichtung, wie sie zum Beispiel für organische Solarzellen eingesetzt werden kann, kommt es bei einer Lagerung in der Feuchte und Wärme zu einer starken Blasenbildung. Auch ein vorheriges Trocknen der Folien und/oder Klebemasse kann diese Blasenbildung nicht verhindern.

In DE 10 2009 036 968 A1 wird beschrieben, wie das Problem beseitigt werden kann. Durch den Einsatz von säure- oder säureanhydridfunktionalisierten Vinylaromatenblockcopolymeren und einem Metallchelat kann durch die Vernetzung die Blasenbildung deutlich reduziert werden. Dieses Verfahren wird auch für Heißschmelzklebemassen erfolgreich angewendet (DE 10 2009 036 970 A1).

Eine Möglichkeit, die Barrierewirkung noch zu verbessern, ist der Einsatz von Stoffen, die mit Wasser oder Sauerstoff reagieren. In die (opto-)elektronische Anordnung eindringender Sauerstoff oder Wasserdampf wird dann an diese Stoffe chemisch oder physikalisch, bevorzugt chemisch gebunden. Diese Stoffe werden in der Literatur als "Getter", "scavenger", "desiccants" oder "absorber" bezeichnet. Im Folgenden wird nur der Ausdruck Getter verwendet. Beschrieben als solche Getter sind in Klebmassen hauptsächlich anorganische Füllstoffe wie beispielsweise Calciumchlorid oder verschiedene Oxide. Da diese in der Klebmasse nicht löslich sind, haben sie den Nachteil, dass die Klebmasse ihre Transparenz und bei entsprechenden Füllgraden an Haftung verliert. Daher sind organische Getter oder Hybride, die

in der Klebmasse löslich sind, besser geeignet, sie dürfen allerdings nicht aus der Klebmasse herauswandern. Diese Zusatzstoffe ändern nicht die Diffusionswerte, sondern nur die Durchbruchszeit, sind die Stoffe mit Wasser beziehungsweise Sauerstoff gesättigt oder in einer chemischen Reaktion mit Wasser beziehungsweise Sauerstoff aufgebraucht, haben sie auch keine Wirkung mehr, die Diffusion ist dann nur die der Klebmasse ohne Getter. Trotzdem können diese Getter die Lebensdauer der (opto)-elektronischen Bauteile erhöhen.

Beispiele für die Verwendung von Gettern in Flüssigklebersystemen zur Verkapselung (opto-)elektronischer Aufbauten sind zum Beispiel in US 6,833,668 B1, JP 2000 311 782 A und EP 1 037 192 A2 gegeben.

Aus dem Stand der Technik ist zudem eine Haftklebemasse bekannt (WO 03/065470 A1), die in einem elektronischen Aufbau als Transferklebemasse verwendet wird. Die Klebemasse enthält einen anorganischen funktionellen Füllstoff, der mit Sauerstoff oder Wasserdampf innerhalb des Aufbaus reagiert. Damit ist eine einfache Applikation eines Getters innerhalb des Aufbaus möglich. Für die Versiegelung des Aufbaus nach außen wird ein weiteres Adhäsiv mit geringer Durchlässigkeit verwendet.

Eine ähnliche Haftklebemasse findet ihre Anwendung in JP 2004 296 381 A. Auch hier werden ausschließlich anorganische Getter verwendet.

Weitere getterhaltige Haftklebemassen sind aus US 5,591,379 A und US 5,304,419 A bekannt, doch werden diese nicht zur Verkapselung eines elektronischen Aufbaus verwendet, sondern innerhalb des Aufbaus platziert.

Aufgabe der vorliegenden Erfindung ist es, eine Klebmasse für die Kapselung einer elektronischen Anordnung gegen Permeanten, insbesondere Wasserdampf und Sauerstoff, vorzulegen, die transparent ist, die eine gute Barriere gegenüber Wasserdampf und Sauerstoff bietet, dessen Elastomer mit Wasser reagieren kann, wodurch die Durchbruchzeit insbesondere von Wasser erhöht wird, mit der gleichzeitig eine gute Kapselung erzielt werden kann und bei der keine Blasen bei Verklebung zwischen zwei Polyesterfolien mit Barriereschicht und Lagerung bei 85 °C und 85 % r.F. gebildet werden. Ferner soll die Lebensdauer von (opto-)elektronischen Anordnungen durch die Verwendung der erfindungsgemäßen insbesondere flexiblen Klebemasse erhöht werden.

Gelöst wird diese Aufgabe durch eine Klebemasse, wie sie im Hauptanspruch niedergelegt ist. Gegenstand der Unteransprüche sind dabei vorteilhafte Weiterbildungen der Klebmasse, Verwendungen derselben sowie Verfahren zu deren Herstellung.

Demgemäß betrifft die Erfindung eine Klebmasse enthaltend ein silanmodifiziertes Polymer entstanden aus der Reaktion

a) eines Säureanhydridgruppen enthaltenden Polymers mit
b) einem Silan der folgenden Formel

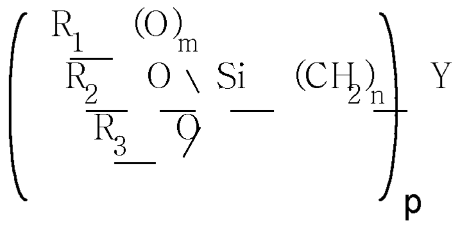

mit

$R_1$, $R_2$, $R_3$ unabhängig voneinander gewählt aus der Gruppe Methyl, Ethyl, 2-Methoxyethyl, i-Propyl, Butyl
m = 0 oder 1
n = 0 bis 12
p = 1 oder 2
und
für p = 1
Y = einer funktionellen Gruppe gewählt aus der Gruppe
Glycidyl, Glycidyloxy, Isocyanato, $-NH-CH_2-CH_2-NR_4R_5$, $-NR_4R_5$ (mit $R_4$ und $R_5$ unabhängig voneinander gewählt aus der Gruppe H, Alkyl, Phenyl, Benzyl, Cyclopentyl, Cyclohexyl), SH
oder
für p = 2
Y= NH

sowie enthaltend einen Vernetzer.

Die erfindungsgemäße Klebmasse ist eine Haftklebmasse, also eine viskoelastische Masse, die bei Raumtemperatur in trockenem Zustand permanent klebrig und klebfähig bleibt. Die Klebung erfolgt durch leichten Anpressdruck sofort auf fast allen Substraten.

Bei der Klebemasse kann es sich auch um eine Schmelzklebemasse handeln, also ein bei Raumtemperatur fester, wasser- und lösemittelfreier Klebstoff, der auf die zu verklebenden Teile aus der Schmelze aufgetragen wird und nach dem Zusammenfügen beim Abkühlen unter Verfestigung physikalisch abbindet. Diese Ausführungsform ist nicht erfindungsgemäß. Als Säureanhydrid enthaltende Polymere im Sinne der Erfindung können sowohl solche eingesetzt werden, die durch Modifizierung fertiger Polymere mit zum Beispiel Maleinsäureanhydrid unter radikalischen Bedingungen hergestellt wurden, als auch solche, die anhydridhaltige Monomere in die Haupt- oder Seitenkette eingebaut haben. Im Falle der modifizierten Polymere können eine Reihe von Polyolefinen wie Polyethylen oder Polypropylen aber auch Poly-$\alpha$-olefine, polymerisiert aus Ethylen und mindestens einem weiteren $\alpha$-Olefin, Polybutene wie Polyisobutylen sowie auch Blockcopolymere aus Ethylen und Propylen eingesetzt werden. Auch Blockcopolymere aus einem Vinylaromaten und einem Dien sind verwendbar, insbesondere wenn der Hauptteil der verbleibenden Doppelbindungen hydriert ist. Bei allen diesen Polymeren ist der Gehalt an Doppelbindungen bevorzugt sehr niedrig, da es bei der Reaktion von den Polymeren mit den Säureanhydriden sonst leicht zu unerwünschten Vernetzungsreaktionen kommen kann.

Bevorzugt werden Blockcopolymere enthaltend Polymerblöcke überwiegend gebildet von Vinylaromaten (A-Blöcke), bevorzugt Styrol, und solche überwiegend gebildet durch Polymerisation von 1,3-Dienen (B-Blöcke), bevorzugt Butadien, Isopren oder einer Mischung aus beiden Monomeren, eingesetzt. Diese B-Blöcke weisen üblicherweise eine geringe Polarität auf. Sowohl Homo- als auch Copolymerblöcke sind als B-Blöcke bevorzugt nutzbar. Auch Blockcopolymere mit Polyisobutylen in der Hauptkette sind verwendbar.

Die aus den A- und B-Blöcken resultierenden Blockcopolymere können gleiche oder unterschiedliche B-Blöcke enthalten, die teilweise, selektiv oder vorzugsweise vollständig hydriert sein können. Die Blockcopolymere können lineare A-B-A Strukturen aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Verwendet werden können auch Blockcopolymere, die neben den oben beschriebenen Blöcken A und B zumindest einen weiteren Block enthalten, wie zum Beispiel A-B-C-Blockcopolymere.

Denkbar ist auch die Verwendung der oben genannten B-Blöcke mit A-Blöcken von anderer chemischer Natur, die eine Glasübergangstemperatur oberhalb der Raumtemperatur zeigen, wie zum Beispiel Polymethylmethacrylat.

In einer vorteilhaften Ausführungsform weisen die Blockcopolymere einen Polyvinylaromatenanteil von 10 Gew.-% bis 35 Gew.-% auf.

Für die Herstellung einer Haftklebemasse beträgt der Anteil der Vinylaromatenblockcopolymere in Summe bezogen auf die gesamte Haftklebmasse bevorzugt mindestens 30 Gew.-%, vorzugsweise mindestens 40 Gew.-%, weiter bevorzugt mindestens 45 Gew.-%.

Ein zu geringer Anteil an Vinylaromatenblockcopolymeren hat zur Folge, dass die Kohäsion der Haftklebemasse relativ niedrig ist.

Der maximale Anteil der Vinylaromatenblockcopolymere in Summe bezogen auf die gesamte Haftklebmasse beträgt maximal 80 Gew.-%, bevorzugt maximal 70 Gew.-%.

Ein zu hoher Anteil an Vinylaromatenblockcopolymere hat wiederum zur Folge, dass die Haftklebemasse kaum noch haftklebrig ist.

Zumindest ist ein Teil der eingesetzten Blockcopolymere dabei säureanhydridmodifiziert. Dabei erfolgt die Anhydridmodifizierung hauptsächlich durch radikalische Pfropfcopolymerisation von ungesättigten Säureanhydriden wie zum Beispiel Maleinsäureanhydrid, Citraconsäureanhydrid, Dimethylmaleinsäureanhydrid, Ethyl- und Diethylmaleinsäureanhydrid, Chlor- und Dichlormaleinsäureanhydrid, Phenylmaleinsäureanhydrid, Itaconsäureanhydrid, Methylitaconsäureanhydrid, Aconitsäureanhydrid, Nadicanhydrid, Methylnadicanhydrid, Tetrahydrophthalsäureanhydrid oder Methyltetrahydrophthalsäureanhydrid, bevorzugt Maleinsäureanhydrid. Bevorzugt liegt der Anteil an Säure beziehungsweise Säureanhydrid zwischen 0,5 und 4 Gew.-% bezogen auf das gesamte Blockcopolymer.

Polymere, bei denen das Säureanhydrid direkt mit in die Polymerkette eingebaut sind, sind zum Beispiel Polymere aus Styrol und Maleinsäureanhydrid, meistens alternierend, wie zum Beispiel SMA-Polymere der Firma Sartomer, Polymere aus Ethylen und Maleinsäureanhydrid wie zum Beispiel Gantrez-Polymere der Firma ISP oder Isobutylen und Maleinsäureanhydrid wie zum Beispiel Isobam der Firma Kuraray, um nur einige wenige zu nennen

Um die Lebensdauer der (opto)-elektronischen Bauteile zu verlängern, können wie oben beschrieben, unterschiedliche Getter zugesetzt werden. Die meisten dieser Getter sind anorganischer Natur und beeinflussen damit die Transparenz der Klebmasse nachteilig. Organische Getter haben häufig den Nachteil, dass die recht kleinen Moleküle zur Wanderung in der Klebmasse neigen. Vorteilhaft ist es daher, die Getter direkt mit in die Polymere einzubauen. Dieses geschieht erfindungsgemäß, indem an die eingesetzten Polymere Silane angeknüpft werden, und zwar über die Säureanhydridgruppen in den Polymeren.

Um silanisierte Polymere zu erhalten, müssen die Anhydridgruppen enthaltenen Polymere mit einem Silan reagieren.

Dazu werden Silane der folgenden Formel eingesetzt:

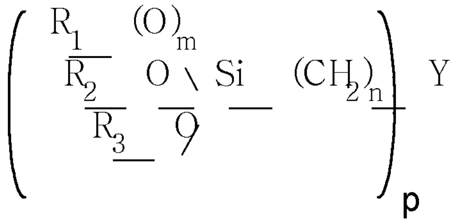

mit

$R_1$, $R_2$, $R_3$ unabhängig voneinander gewählt aus der Gruppe Methyl, Ethyl, 2-Methoxyethyl, i-Propyl, Butyl
m = 0 oder 1
n = 0 bis 12
p = 1 oder 2
und
für p = 1
Y = einer funktionellen Gruppe gewählt aus der Gruppe
Glycidyl, Glycidyloxy, Isocyanato, $-NH-CH_2-CH_2-NR_4R_5$, $-NR_4R_5$ (mit $R_4$ und $R_5$ unabhängig voneinander gewählt aus der Gruppe H, Alkyl, Phenyl, Benzyl, Cyclopentyl, Cyclohexyl), SH
oder
für p = 2
Y= NH

Besonders bevorzugt sind dabei Silane mit einer Amino- oder Sulfidgruppe.

Die Reaktion mit den Polymeren kann dabei spontan in Lösung geschehen oder durch Erhitzen und Zugabe von Katalysatoren wie zum Beispiel Säuren beschleunigt werden. Idealerweise erfolgt die Reaktion spontan, so dass alle Komponenten der Klebmasse, neben den Polymeren und Silanen auch die Klebrigmacher, Weichmacher und sonstige Hilfsstoffe, gleichzeitig in Lösung gebracht werden können und die Reaktion während des Lösens der einzelnen Komponenten stattfindet.

Um aus diesen silanmodifizierten Polymeren Haftklebemassen zu erhalten, werden bevorzugt Klebrigmacher eingesetzt. Hierzu dienen Klebharze, die mit dem silanmodifizierten Polymer bei den Vinylaromatenblockcopolymeren mit den Weichblöcken verträglich sind.

Geeignete Klebharze sind unter anderem vorzugsweise nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von $C_5$-, $C_5/C_9$- oder $C_9$-Monomerströmen, Polyterpenharze auf Basis von $\alpha$-Pinen und/oder $\beta$-Pinen und/oder $\delta$-Limonen, hydrierte Polymerisate von bevorzugt reinen $C_8$- und Cg-Aromaten. Vorgenannte Klebharze können sowohl allein als auch im Gemisch eingesetzt werden. Dabei können sowohl bei Raumtemperatur feste als auch flüssige Harze zum Einsatz kommen.

Um eine hohe Alterungs- und UV-Stabilität zu gewährleisten sind hydrierte Harze mit einem Hydrierungsgrad von mindestens 90 %, vorzugsweise von mindestens 95 %, bevorzugt.

Des Weiteren sind unpolare Harze mit einem DACP-Wert (diacetone alcohol cloud point) oberhalb von 30 °C und einem MMAP-Wert (mixed methylcylohexane aniline point) von größer 50 °C, insbesondere mit einem DACP-Wert oberhalb von 37 °C und einem MMAP-Wert größer 60 °C bevorzugt. Der DACP-Wert und der MMAP-Wert geben jeweils die Löslichkeit in einem bestimmten Lösemittel an. Durch die Auswahl dieser Bereiche wird eine besonders hohe Permeationsbarriere, insbesondere gegen Wasserdampf, erreicht.

Weiter bevorzugt sind Harze mit einer Erweichungstemperatur (Ring/Kugel, Bestimmung nach DIN EN ISO 4625) von mehr als 95 °C, insbesondere mehr als 100 °C. Durch diese Auswahl wird eine besonders hohe Permeationsbarriere, insbesondere gegen Sauerstoff, erreicht.

Unter dem Erweichungspunkt versteht man die Temperatur (beziehungsweise den Temperaturbereich), bei dem Gläser, amorphe oder teilkristalline Polymere vom glasigen, hartelastischen in einen weichen Zustand übergehen. Die Verminderung der Härte entsprechender Stoffe am Erweichungspunkt wird zum Beispiel dadurch deutlich, dass ein auf eine Stoffprobe unter Belastung aufgesetzter Körper bei Erreichen des Erweichungspunktes in diese eingedrückt wird. Der Erweichungspunkt liegt grundsätzlich oberhalb der Glasübergangstemperatur, bei den meisten Polymeren

jedoch deutlich unterhalb der Temperatur, bei der diese vollständig in den flüssigen Zustand übergehen.

Wenn eine Erhöhung der Klebkraft erreicht werden soll, sind dagegen insbesondere Harze mit einer Erweichungstemperatur unterhalb von 95 °C, insbesondere unterhalb von 90 °C bevorzugt.

Gemäß einer bevorzugten Ausführungsform enthält die Klebemasse Klebrigmacher, vorzugsweise zu einem Anteil von bis 60 Gew.-% bezogen auf die Gesamtmenge. Im Falle einer Schmelzklebers kann der Anteil geringer sein, beispielsweise bis zu 30 Gew.-% bezogen auf die Gesamtmenge.

Als weitere Additive können typischerweise genutzt werden:

- Plastifizierungsmittel wie zum Beispiel Weichmacheröle oder niedermolekulare flüssige Polymere wie zum Beispiel niedermolekulare Polybutene
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Endblockerstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

Es sei erwähnt, dass die erfindungsgemäße Klebemasse auch ohne die aufgeführten Harze und/oder Additive je nach Anwendungsfall geeignet ist, sei es dass die Harze und/oder Additive in ihrer Gesamtheit, in beliebiger Kombination oder jeweils einzeln weggelassen werden.

Insbesondere verzichtet die erfindungsgemäße Klebemasse auf anorganische Silikate und Alumosilikate.

Um die Kohäsion insbesondere bei erhöhten Temperaturen zu steigern, werden diese oben beschriebenen Klebmassen vernetzt.

Durch die Reaktion des reaktiven Silans mit den Säureanhydridgruppen der Polymere, werden die Silane an die Polymere gekoppelt. Gleichzeitig entstehen aber auch Säuregruppen, die zu einer Vernetzung genutzt werden können.

Die silanmodifizierten Polymere können also sowohl über die entstandenen Säuregruppen als auch über noch vorhandene Säureanhydridgruppen, die durch einen Unterschuss des Silans nicht abreagiert sind, vernetzt werden

Die Vernetzung dieser Polymere kann auf unterschiedliche Weise erfolgen.

Zum einen können die Säure- beziehungsweise Säureanhydridgruppen mit Vernetzern reagieren, wie zum Beispiel verschiedenen Aminen bei den Säureanhydriden, oder Epoxidharzen, die mit Säuren und Säureanhydriden reagieren können.

Als Amine können dabei primäre und sekundäre Amine aber auch Amide und andere Stickstoffhaltige Verbindung mit einem Wasserstoff direkt am Stickstoff gebunden, zum Einsatz kommen.

Als Epoxidharze werden üblicherweise sowohl monomere als auch oligomere Verbindungen mit mehr als einer Epoxidgruppe pro Molekül verstanden. Dieses können Reaktionsprodukte von Glycidestern oder Epichlorhydrin mit Bisphenol A oder Bisphenol F oder Mischungen aus Bisphenol A oder Bisphenol F sein. Einsetzbar sind ebenfalls Epoxidnovolakharze gewonnen durch Reaktion von Epichlorhydrin mit dem Reaktionsprodukt aus Phenolen und Formaldehyd. Auch monomere Verbindungen mit mehreren Epoxidendgruppen, die als Verdünner für Epoxidharze eingesetzt werden sind verwendbar. Ebenfalls sind elastisch modifizierte Epoxidharze einsetzbar oder epoxidmodifizierte Elastomere wie zum Beispiel epoxidierte Styrolblockcopolymere, zum Beispiel Epofriend der Firma Daicel.

Beispiele von Epoxidharzen sind AralditeTM 6010, CY-281TM, ECNTM 1273, ECNTM 1280, MY 720, RD-2 von Huntsman, DERTM 331, 732, 736, DENTM 432 von Dow Chemicals, EponTM 812, 825, 826, 828, 830 etc. von Shell Chemicals, HPTTM 1071, 1079 ebenfalls von Shell Chemicals, Epikote, 164, 862, 1001 etc. der Firma Hexion.

Kommerzielle aliphatische Epoxidharze sind zum Beispiel Vinylcyclohexandioxide wie ERL-4206, 4221, 4201, 4289 oder 0400 von Union Carbide Corp.

Elastifizierte Elastomere sind erhältlich von der Firma Noveon unter dem Namen Hycar.

Epoxidverdünner, monomere Verbindungen mit mehreren Epoxidgruppen sind zum Beispiel PolypoxTM R 9, R12, R 15, R 19, R 20 etc. der Firma UCCP.

Üblicherweise wird bei diesen Reaktionen auch ein Beschleuniger eingesetzt. Dieser kann zum Beispiel aus der Gruppe der tertiären Amine oder modifizierten Phosphine, wie zum Beispiel Triphenylphosphin, kommen.

Während die Reaktion der Säureanhydride mit den Aminen häufig schon bei Raumtemperatur stattfindet, läuft

die Vernetzung mit den Epoxidharzen im Allgemeinen unter erhöhter Temperatur ab.

Die zweite Möglichkeit der Vernetzung erfolgt über Metallchelate.

Eine Vernetzung von maleinsäureanhydridmodifizierten Blockcopolymeren mit Metallchelaten ist bekannt aus EP 1 311 559 B1, bei der eine Steigerung der Kohäsion der Blockcopolymermischungen beschrieben wird.

Die Metalle der Metallchelate können die der 2. 3. 4. und 5. Hauptgruppe und die Übergangsmetalle sein. Besonders geeignet sind zum Beispiel Aluminium, Zinn, Titan, Zirkonium, Hafnium, Vanadium, Niob, Chrom, Mangan, Eisen, Kobalt, und Cer. Besonders bevorzugt sind Aluminium und Titan.

Für die Chelatvernetzung können unterschiedliche Metallchelate zum Einsatz kommen, die durch die folgende Formel wiedergegeben werden können:

$$(R_1O)_n\ M\ (XR_2Y)_m,$$

wobei

- M ein Metall der 2., 3., 4. oder 5. Hauptgruppe oder ein Übergangsmetall ist,
- $R_1$ eine Alkyl- oder Arylgruppe wie Methyl, Ethyl, Butyl, Isopropyl oder Benzyl ist,
- n null oder eine größere ganze Zahl ist,
- X, Y Sauerstoff oder Stickstoff sind, die jeweils auch durch eine Doppelbindung an $R_2$ gebunden sein können;
- $R_2$ eine X und Y verbindende Alkylengruppe ist, die verzweigt sein kann, oder auch Sauerstoff oder weitere Heteroatome in der Kette enthalten kann;
- m eine ganze Zahl, mindestens jedoch 1 ist.

Bevorzugte Chelatliganden sind solche, die aus der Reaktion einer Metallatom enthaltender Verbindung und folgender Verbindungen entstanden sind: Triethanolamin, 2,4-Pentandion, 2-Ethyl-1,3-Hexandiol oder Milchsäure

Besonders bevorzugte Vernetzer sind Aluminium- und Titanylacetylacetonat.

Dabei sollte ein annähernd äquivalentes Verhältnis zwischen den Säurebeziehungsweise Säureanhydridgruppen und den Acetylacetonatgruppen gewählt werden, um eine optimale Vernetzung zu erreichen, wobei sich ein kleiner Überschuss an Vernetzer als positiv herausgestellt hat.

Das Verhältnis zwischen Säuregruppen und Acetylacetonatgruppen kann aber variiert werden, dabei sollte für eine ausreichende Vernetzung keine der beiden Gruppen in mehr als einem fünffachen molaren Überschuss vorliegen.

Überraschenderweise zeigen auch Haftklebmassen, die mit Chelaten vernetzte mit Säure oder Säureanhydrid modifizierte Vinylaromatenblockcopolymere enthalten, eine sehr niedrige Wasserdampf- beziehungsweise Sauerstoff-Durchlässigkeit. Dieses konnte von einer Haftklebemasse mit solch polaren Bestandteilen wie Säureanhydriden und Metallchelaten nicht erwartet werden.

Die vorliegende Erfindung beruht zunächst auf der Erkenntnis, dass es trotz der zuvor beschriebenen Nachteile dennoch möglich ist, eine Schmelz- oder Haftklebemasse zur Kapselung einer elektronischen Anordnung zu verwenden, bei der die zuvor bezüglich der Haftklebemassen beschriebenen Nachteile nicht oder nur vermindert auftreten. Es hat sich nämlich gezeigt, dass Schmelz- oder Haftklebemassen, die einen kovalent an das Polymer gebundenen Getter enthalten, besonders gut für die Verkapselung elektronischer Bauelemente geeignet sind, da zum einen nicht die Gefahr besteht, dass ein organischer (fluider) Getter in die elektronisch aktiven Bauteile migriert und dort zu Schädigungen führt und zum anderen die bei der Verwendung partikulärer Getter auftretende Klebkraftreduktion der Klebemasse vermieden wird.

Es zeigte sich weiterhin, dass eine zumindest teilweise vernetzte Schmelz- oder Haftklebemasse auf Basis von silanisierten möglichst unpolaren Polymeren zur Kapselung elektronischer Anordnungen besonders geeignet ist. Erfindungsgemäß wird entsprechend eine Haftklebemasse auf Basis von vernetzbaren silanisierten unpolaren Polymeren bereitgestellt und auf die zu kapselnden Bereiche der elektronischen Anordnung appliziert. Insbesondere wenn es sich bei der Klebemasse um eine Haftklebemasse handelt, ist die Applikation besonders einfach, da keine Vorfixierung oder dgl. erfolgen muss. Je nach Ausgestaltung der Haftklebemasse ist auch keine nachfolgende Behandlung mehr erforderlich.

Eine zumindest teilweise Vernetzung bedeutet, dass zumindest ein Teil der für eine Vernetzung zur Verfügung stehenden chemischen Gruppen auch tatsächlich für eine Vernetzung umgesetzt wurde.

Im Bereich der Klebstoffe zeichnen sich Haftklebemassen insbesondere durch ihre permanente Klebrigkeit und Flexibilität aus. Ein Material, das permanente Haftklebrigkeit aufweist, muss zu jedem Zeitpunkt eine geeignete Kombination aus adhäsiven und kohäsiven Eigenschaften aufweisen. Diese Charakteristik unterscheidet die Haftklebemassen beispielsweise von reaktiven Klebstoffen, die im nicht ausreagierten Zustand kaum Kohäsion bieten. Für gute Haftungseigenschaften gilt es, Haftklebemassen so einzustellen, dass eine optimale Balance aus adhäsiven und kohäsiven Eigenschaften besteht.

Als Kapselung wird vorliegend nicht nur ein vollumfänglicher Einschluss mit der genannten Haftklebemasse

bezeichnet sondern auch bereits eine bereichsweise Applikation der Haftklebemasse auf den zu kapselnden Bereichen der (opto)-elektronischen Anordnung, beispielsweise eine einseitige Überdeckung oder eine Umrahmung einer elektronischen Struktur.

Durch die Auswahl der Bestandteile der Haftklebemasse und die dadurch geringe Polarität und dem daraus resultierenden niedrigen Löslichkeits-Term (S) des Diffusionskoeffizienten wird ein niedriges Durchtrittsvermögen von Permeanten wie Wasserdampf und Sauerstoff erreicht, insbesondere aber von Wasserdampf. Das eingebundene Silan sorgt weiterhin für eine Erhöhung der Durchbruchszeit.

Vorteil der hier vorliegenden Erfindung ist also, im Vergleich zu anderen Haftklebemassen, die Kombination aus sehr guten Barriereeigenschaften gegenüber Sauerstoff und vor allem gegenüber Wasserdampf bei gleichzeitiger guter Grenzflächenhaftung auf unterschiedlichen Substraten, guten kohäsiven Eigenschaften, auch bei erhöhten Temperaturen durch eine im folgenden beschriebene Vernetzungsreaktion und, im Vergleich zu Flüssigklebstoffen, eine sehr hohe Flexibilität und eine einfache Applikation in der (opto-)elektronischen Anordnung und bei/in der Kapselung. Des Weiteren liegen in bestimmten Ausführungen auch transparente Klebemassen vor, die in besonderer Weise für den Einsatz in (opto-)elektronischen Anordnungen Anwendung finden können, da eine Verminderung von einfallendem oder austretendem Licht sehr gering gehalten wird.

Insbesondere wird die Blasenbildung bei Lagerung unter Wärme und Feuchtigkeit unterdrückt. Eine derartige Haftklebemasse kann auf einfache Weise in eine elektronische Anordnung integriert werden, insbesondere auch in solche Anordnung, die hohe Flexibilität erfordert. Weitere besonders vorteilhafte Eigenschaften der Haftklebemasse sind ähnlich gute Haftung auf unterschiedlichen Substraten, hohe Scherfestigkeit und hohe Flexibilität. Durch eine sehr gute Haftung am Substrat wird zudem auch eine geringe Grenzflächenpermeation erzielt. Durch die Verwendung der hier beschriebenen Formulierungen für die Verkapselung von (opto-) elektronischen Strukturen werden vorteilhafte Anordnungen gewonnen, die die oben genannten Vorteile vereinen, den Verkapselungsprozess dadurch beschleunigen und vereinfachen sowie die Produktqualität erhöhen.

Da in bestimmten Ausführungen der Haftklebemasse keine weiteren thermischen Prozessschritte oder Bestrahlung notwendig sind, kein Schrumpf durch eine nach der Applikation ausgeführte Vernetzungsreaktion beim Aufbau des (opto-) elektronischen Aufbaus auftritt und die Haftklebemasse als bahnförmiges Material oder in einer der elektronischen Anordnung entsprechend angepassten Form vorliegt, kann die Masse einfach und schnell unter geringem Druck in den Verkapselungsprozess des (opto)-elektronischen Aufbaus integriert werden. Die üblicherweise mit den vermiedenen Verarbeitungsschritten einhergehenden Nachteile, wie thermische und mechanische Belastungen, können so minimiert werden. Eine Verkapselung durch Lamination von zumindest Teilen der (opto-)elektronischen Aufbauten mit einem flächigen Barrierematerial (zum Beispiel Glas, insbesondere Dünnglas, metalloxidbeschichteten Folien, Metallfolien, Multilayer-Substratmaterialien) ist mit sehr guter Barrierewirkung in einem einfachen Rolle-zu-Rolle Prozess möglich. Die Flexibilität des gesamten Aufbaus hängt, neben der Flexibilität der Haftklebemasse von weiteren Faktoren, wie Geometrie und Dicke der (opto-)elektronischen Aufbauten beziehungsweise der flächigen Barrierematerialien ab. Die hohe Flexibilität der Haftklebemasse ermöglicht es aber sehr dünne, biegsame und flexible (opto-) elektronische Aufbauten zu realisieren. Unter dem benutzten Begriff "biegsam" ist die Eigenschaft zu verstehen, dass der Krümmung eines gebogenen Gegenstands wie einer Trommel mit bestimmtem Radius, insbesondere mit einem Radius von 1 mm, ohne Beschädigung gefolgt wird.

Von besonderem Vorteil für die Kapselung von (opto-)elektronischen Aufbauten ist es, wenn die vernetzte oder noch unvernetzte erfindungsgemäße Haftklebemasse während oder nach der Applikation erwärmt wird. Dadurch kann die Haftklebemasse besser auffließen und somit die Permeation an der Grenzfläche zwischen der (opto-) elektronischen Anordnung und der Haftklebemasse vermindert werden. Die Temperatur sollte dabei bevorzugt mehr als 30 °C, weiter bevorzugt mehr als 50 °C betragen, um das Auffließen entsprechend zu fördern. Zu hoch sollte die Temperatur jedoch nicht gewählt werden, um die (opto-)elektronische Anordnung nicht zu beschädigen.

In bevorzugter Ausgestaltung eines Verfahrens zur Kapselung einer elektronischen Anordnung gegen Permeanten kann die Haftklebemasse in Form eines Klebebandes bereitgestellt werden. Diese Darreichungsart erlaubt eine besonders einfache und gleichmäßige Applikation der Haftklebemasse.

Der allgemeine Ausdruck "Klebeband" umfasst dabei in einer Ausführungsform ein Trägermaterial, welches ein- oder beidseitig mit einer Haftklebemasse versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge, Mehrschichtanordnungen und dergleichen.

Das Klebeband kann in festen Längen wie zum Beispiel als Meterware oder aber als Endlosware auf Rollen (archimedische Spirale) zur Verfügung gestellt werden.

Als Träger können alle bekannten Träger eingesetzt werden, zum Beispiel wie Gelege, Gewebe, Gewirke, Vliese, Folien, Papiere, Tissues, Schäume und geschäumte Folien. Es werden vorliegend bevorzugt Polymerfolien, Folienverbunde oder mit organischen und/oder anorganischen Schichten versehene Folien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien:

Polyethylen, Polypropylen - insbesondere das durch mono-oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Insbesondere sind vernetzte Polyethylenschäume oder viskoelastische Träger geeignet. Letztere sind vorzugsweise aus Polyacrylat, besonders bevorzugt gefüllt mit hohlen Körpern aus Glas oder Polymeren. Die Träger können vor dem Zusammenbringen mit der Klebemasse durch Primerung oder physikalische Vorbehandlung wie Corona oder Ätzen vorbereitet werden.

Der Träger kann auch mehrlagig sein, beispielsweise durch das Zusammenlaminieren unterschiedlicher Schichten oder das Coextrudieren von Schichten.

Der Träger kann zudem mit organischen oder anorganischen Beschichtungen oder Schichten kombiniert sein. Dies kann durch übliche Verfahren, wie zum Beispiel Lackieren, Drucken, Bedampfen, Sputtern, Co-Extrusion oder Lamination geschehen. Beispielhaft, aber nicht einschränkend erwähnt seien hier etwa Oxide oder Nitride des Siliciums und des Aluminiums, Indium-Zinn-Oxid (ITO) oder Sol-Gel-Beschichtungen.

Besonders bevorzugt sind diese Folien/Folienverbunde, insbesondere die Polymerfolien, mit einer Permeationsbarriere für Sauerstoff und Wasserdampf versehen, wobei die Permeationsbarriere die Anforderungen für den Verpackungsbereich übertrifft (WVTR < $10^{-1}$ g/($m^2$d); OTR < $10^{-1}$ $cm^3$/($m^2$d bar)). Die Bestimmung der Permeabilität für Sauerstoff (OTR) und Wasserdampf (WVTR) erfolgt nach DIN 53380 Teil 3 beziehungsweise ASTM F-1249. Die Sauerstoffdurchlässigkeit wird bei 23 °C und einer relativen Feuchte von 50 % gemessen. Die Wasserdampfdurchlässigkeit wird bei 37,5 °C und einer relativen Feuchte von 90 % bestimmt. Die Ergebnisse werden auf eine Foliendicke von 50 μm normiert.

Zudem können die Folien/Folienverbunde in bevorzugter Ausgestaltung transparent ausgebildet sein, damit auch der Gesamtaufbau eines derartigen Klebeartikels transparent ausgebildet ist. "Transparenz" bedeutet dabei eine mittlere Transmission im sichtbaren Bereich des Lichts von mindestens 75 %, bevorzugt höher als 90 %.

Des Weiteren umfasst der Ausdruck "Klebeband" auch so genannte "Transferklebebänder", das heißt ein Klebeband ohne Träger. Bei einem Transferklebeband ist die Klebemasse vielmehr vor der Applikation zwischen flexiblen Linern, die mit einer Trennschicht versehen sind und/oder anti-adhäsive Eigenschaften aufweisen, aufgebracht. Zur Applikation wird regelmäßig zunächst ein Liner entfernt, die Klebemasse appliziert und dann der zweite Liner entfernt. Die Haftklebemasse kann so direkt zur Verbindung zweier Oberflächen in (opto-)elektronischen Anordnungen verwendet werden.

Weiter bevorzugt kommt eine Haftklebemasse zum Einsatz, die in bestimmten Ausführungen im sichtbaren Licht des Spektrums (Wellenlängenbereich von etwa 400 nm bis 800 nm) transparent ist. Für bestimmte Anwendungen, etwa bei Solarzellen kann dieser Bereich aber auch auf definierte UV oder IR-Regionen erweitert werden. Die gewünschte Transparenz im bevorzugten Bereich des sichtbaren Spektrums lässt sich insbesondere durch die Verwendung farbloser Klebharze erzielen. Eine derartige Haftklebemasse eignet sich somit auch für einen vollflächigen Einsatz über einer (opto-)elektronischen Struktur. Eine vollflächige Verklebung bietet, bei einer etwa mittigen Anordnung der elektronischen Struktur gegenüber einer Randversiegelung den Vorteil, dass der Permeant durch die gesamte Fläche diffundieren müsste, bevor er die Struktur erreicht. Der Permeationsweg ist somit deutlich erhöht. Die in dieser Ausführungsform verlängerten Permeationswege im Vergleich zur Randversiegelung etwa durch Flüssigklebstoffe wirken sich positiv auf die Gesamtbarriere aus, da der Permeationsweg umgekehrt proportional zur Durchlässigkeit ist.

"Transparenz" bedeutet dabei eine mittlere Transmission der Klebemasse im sichtbaren Bereich des Lichts von mindestens 75 %, bevorzugt höher als 90 %. Bei der Ausführung als Haftklebeband mit Träger hängt die die maximale Transmission des gesamten Aufbaus zudem von der Art des verwendeten Trägers und der Art des Aufbaus ab.

Die elektronischen Strukturen (opto-)elektronischer Anordnungen sind oftmals anfällig gegenüber UV-Strahlung. Als besonders vorteilhaft hat sich daher herausgestellt, wenn die Haftklebemasse zudem UV-blockend ausgebildet ist. Unter dem Begriff "UV-blockend" wird vorliegend ein mittlerer Transmissionsgrad von maximal 20 %, vorzugsweise von maximal 10 %, weiter bevorzugt von maximal 1 % im entsprechenden Wellenlängenbereich bezeichnet. In bevorzugter Ausgestaltung ist die Haftklebemasse im Wellenlängenbereich von 320 nm bis 400 nm (UVA-Strahlung) UV-blockend ausgebildet, vorzugsweise im Wellenlängenbereich von 280 nm bis 400 nm (UVA- und UVB-Strahlung), weiter vorzugsweise im Wellenlängenbereich von 190 nm bis 400 nm (UVA-, UVB- und UVC-Strahlung).

Die UV-blockende Wirkung der Haftklebemasse kann insbesondere durch eine Zugabe von UV-Blockern oder geeigneten Füllstoffen zur Haftklebemasse erzielt werden. Als UV-Blocker eignen sich beispielsweise HALS (Hindert Armine Light Stabilizer) wie Tinuvin der Firma BASF oder Benzimidazolderivate. Als Füllstoff ist besonders Titandioxid geeignet, ganz besonders nanoskaliges Titandioxid, da hierdurch eine Transparenz im sichtbaren Bereich beibehalten werden kann.

In einer weiteren vorteilhaften Ausführung zeigt die Haftklebemasse eine sehr gute Beständigkeit gegen Witterungseinflüsse und UV-Licht. Diese Beständigkeit kann insbesondere durch Verwendung von hydrierten Elastomeren und/oder hydrierten Harzen erzielt werden.

In einer Ausführungsform der vorliegenden Erfindung enthält die Haftklebemasse auch Füllstoffe, beispielhaft, aber nicht einschränkend erwähnt seien Oxide, Hydroxide, Carbonate, Nitride, Halogenide, Carbide oder gemischte Oxid-/ Hydroxid-/ Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen können verwendet werden.

Bevorzugt werden als Füllstoffe der Haftklebmasse nanoskalige und/oder transparente Füllstoffe verwendet. Als nanoskalig wird ein Füllstoff vorliegend bezeichnet, wenn er in mindestens einer Dimension eine maximale Ausdehnung von etwa 100 nm, bevorzugt von etwa 10 nm, aufweist. Besonders bevorzugt werden solche in der Masse transparente Füllstoffe mit plättchenförmiger Kristallitstruktur und einem hohen Aspektverhältnis bei homogener Verteilung verwendet. Die Füllstoffe mit plättchenartiger Kristallitstruktur und Aspektverhältnissen weit über 100 haben in der Regel nur eine Dicke von einigen nm, die Länge beziehungsweise die Breite der Kristallite kann aber bis zu einigen μm betragen. Derartige Füllstoffe werden ebenfalls als Nanopartikel bezeichnet. Die partikuläre Ausgestaltung der Füllstoffe mit kleinen Abmessungen ist zudem besonders vorteilhaft für eine transparente Auslegung der Haftklebemasse.

Durch den Aufbau labyrinthartiger Strukturen mithilfe der zuvor beschriebenen Füllstoffe in der Klebstoffmatrix wird der Diffusionsweg von zum Beispiel Sauerstoff und Wasserdampf derartig verlängert, dass ihre Permeation durch die Klebstoffschicht hindurch vermindert wird. Zur besseren Dispergierbarkeit dieser Füllstoffe in der Bindemittelmatrix können diese Füllstoffe mit organischen Verbindungen oberflächlich modifiziert: werden. Der Einsatz derartiger Füllstoffe an sich ist beispielsweise aus der US 2007/0135552 A1 sowie der WO 02/026908 A1 bekannt.

Falls in bestimmten Ausführungsformen eine weitere Erhöhung der Durchbruchszeit oder die Kombination der silanisierten Polymere mit Sauerstoff-Gettern vorteilhaft für den Aufbau ist, können zusätzlich zu den silanisierten Polymeren natürlich weitere Füllstoffe eingesetzt werden, die mit Sauerstoff und/oder Wasserdampf in besonderer Weise wechselwirken können. In die (opto-)elektronische Anordnung eindringender Sauerstoff oder Wasserdampf wird dann an diesen Füllstoffen, Gettern, chemisch oder physikalisch gebunden. Solche Getter umfassen beispielhaft, aber nicht einschränkend: oxidierbare Metalle, Halide, Salze, Silicate, Oxide, Hydroxide, Sulfate, Sulfite, Carbonate von Hauptgruppen- und Übergangsmetallen, Perchlorate und aktivierten Kohlenstoff, einschließlich seiner Modifikationen. Beispiele sind Cobaltchlorid, Calciumchlorid, Calciumbromid, Lithiumchlorid, Zinkchlorid, Zinkbromid, Siliciumdioxid (Silica Gel), Aluminiumoxid (aktiviertes Aluminium), Calciumsulfat, Kupfersulfat, Natriumdithionit, Natriumcarbonat, Magnesiumcarbonat, Titandioxid, Bentonit, Montmorillonit, Diatomenerde, Zeolithe und Oxide von (Erd)Alkalimetallen, wie Bariumoxid, Calciumoxid, Eisenoxid und Magnesiumoxid oder auch Kohlenstoffnanoröhrchen. Desweiteren können auch organische Getter eingesetzt werden. Beispielhaft seien hier genannt, Polyamid-Copolymere, PET-Copolyester oder weitere auf Hybridpolymeren basierte Getter, die meist in Kombination mit Katalysatoren wie beispielsweise Cobalt verwendet werden oder auch metallorganische Verbindungen auf Basis von zum Beispiel Aluminium, Zink, Titan, Magnesium oder auch Bor. Weitere organische Getter sind etwa schwach vernetzte Polyacrylsäure, Ascorbate, Glucose, Gallussäure oder ungesättigte Fette und Öle.

Um eine möglichst gute Wirksamkeit der Füllstoffe hinsichtlich der Barrierewirkung zu erzielen, sollte ihr Anteil nicht zu gering sein. Der Anteil beträgt vorzugsweise mindestens 5 Gew.-%, weiter bevorzugt mindestens 10 Gew.-% und ganz bevorzugt mindestens 15 Gew.-%. Typischerweise wird ein möglichst hoher Anteil von Füllstoffen eingesetzt, ohne dabei die Klebkräfte der Haftklebemasse zu stark herabzusetzen oder weitere Eigenschaften zu beeinträchtigen. Der Anteil beträgt daher in einer Auslegung maximal 95 Gew.-%, bevorzugt maximal 70 Gew.-%, weiter bevorzugt maximal 50 Gew.-%.

Des Weiteren ist eine möglichst feine Verteilung und möglichst hohe Oberfläche der Füllstoffe vorteilhaft. Dies ermöglicht einen höheren Wirkungsgrad und eine höhere Beladungskapazität und wird insbesondere mit nanoskaligen Füllstoffen erreicht.

Im Gegensatz zu nicht vernetzten Klebmassen auf Basis von Vinylaromatenblockcopolymeren oder auch auf Basis von Polyisobutylen zeigen die erfindungsgemäßen Klebmassen bei Verklebung zwischen zwei Polyesterfolien, die zusätzlich eine Barriereschicht besitzen, keine Blasen nach Lagerung bei 85°C und 85%rF.

Die Herstellung und Verarbeitung der Haftklebemasse kann aus Lösung, Dispersion sowie aus der Schmelze erfolgen. Bevorzugt erfolgt die Herstellung und Verarbeitung aus Lösung oder aus der Schmelze. Besonders bevorzugt ist die Fertigung der Klebmasse aus Lösung. Dabei werden die Bestandteile der Haftklebemasse in einem geeigneten Lösungsmittel, zum Beispiel Toluol oder Mischungen aus Benzin und Aceton, gelöst und mit allgemein bekannten Verfahren auf den Träger aufgebracht. Bei der Verarbeitung aus der Schmelze können dies Auftragsverfahren über eine Düse oder einen Kalander sein. Bei Verfahren aus der Lösung sind Beschichtungen mit Rakeln, Messern, Walzen oder Düsen bekannt, um nur einige zu nennen.

In einer bevorzugten Ausführung enthält die Haftklebemasse nicht mehr flüchtige organische Verbindungen

(VOC) als 50 µg Kohlenstoff pro Gramm Masse, insbesondere nicht mehr als 10 µg C/g, gemessen nach VDA 277. Dies hat den Vorteil besserer Verträglichkeit mit den organischen Materialien des elektronischen Aufbaus sowie mit eventuell vorhandenen Funktionsschichten, wie zum Beispiel einer transparenten leitfähigen Metalloxidschicht ,wie zum Beispiel Indium-Zinn-Oxid, oder einer solchen Schicht aus intrinsisch leitfähigem Polymer.

Die Haftklebemasse kann entweder zur vollflächigen Verklebung von (opto)-elektronischen Anordnungen verwendet werden oder nach entsprechender Konfektionierung können Stanzlinge, Rollen oder sonstige Formkörper aus der Haftklebemasse oder dem Haftklebeband hergestellt werden. Entsprechende Stanzlinge und Formkörper der Haftklebemasse / des Haftklebebandes werden dann vorzugsweise auf das zu verklebende Substrat aufgeklebt, etwa als Umrandungen oder Begrenzung einer (opto-)elektronischen Anordnung. Die Wahl der Form des Stanzlings oder des Formkörpers ist nicht eingeschränkt und wird abhängig von der Art der (opto-)elektronischen Anordnung gewählt. Die Möglichkeit der flächigen Laminierung ist, im Vergleich zu Flüssigklebstoffen durch die Erhöhung der Permeationsweglänge durch seitliches Eindringen der Permeanten von Vorteil für die Barriereeigenschaften der Masse, da die Permeationsweglänge sich umgekehrt proportional auf die Permeation auswirkt.

Sofern die Haftklebemasse in Form eines flächigen Gebildes mit einem Träger bereitgestellt wird, ist bevorzugt, dass die Dicke des Trägers bevorzugt im Bereich von etwa µm 1 bis etwa 350 µm liegt, weiter bevorzugt zwischen etwa 4 µm und etwa 250 µm und besonders bevorzugt zwischen etwa 12 µm und etwa 150 µm. Die optimale Dicke hängt von der (opto-)elektronischen Anordnung, der Endanwendung und der Art der Ausführung der Haftklebemasse ab. Sehr dünne Träger im Bereich von 1 bis 12 µm werden eingesetzt bei (opto-)elektronische Aufbauten, die eine geringe Gesamtdicke erreichen sollen, es wird jedoch der Aufwand für die Integration in den Aufbau erhöht. Sehr dicke Träger zwischen 150 und 350 µm werden eingesetzt wenn eine erhöhte Permeationsbarriere durch den Träger und die Steifigkeit des Aufbaus im Vordergrund stehen; die Schutzwirkung wird durch den Träger erhöht, während die Flexibilität des Aufbaus verringert wird. Der bevorzugte Bereich zwischen 12 und 150 µm stellt für die meisten (opto-)elektronischen Aufbauten einen optimalen Kompromiss als Verkapselungslösung dar.

Weitere Einzelheiten, Ziele, Merkmale und Vorteile der vorliegenden Erfindung werden nachfolgend anhand bevorzugter Ausführungsbeispiele näher erläutert.

Es zeigen

Fig. 1 eine erste (opto-)elektronische Anordnung in schematischer Darstellung,

Fig. 2 eine zweite (opto-)elektronische Anordnung in schematischer Darstellung,

Fig. 3 eine dritte (opto-)elektronische Anordnung in schematischer Darstellung.

Fig. 1 zeigt eine erste Ausgestaltung einer (opto-)elektronischen Anordnung 1. Diese Anordnung 1 weist ein Substrat 2 auf, auf dem eine elektronische Struktur 3 angeordnet ist. Das Substrat 2 selbst ist als Barriere für Permeanten ausgebildet und bildet damit einen Teil der Kapselung der elektronischen Struktur 3. Oberhalb der elektronischen Struktur 3, vorliegend auch räumlich von dieser beabstandet, ist eine weitere als Barriere ausgebildete Abdeckung 4 angeordnet.

Um die elektronische Struktur 3 auch zur Seite hin zu kapseln und gleichzeitig die Abdeckung 4 mit der elektronischen Anordnung 1 im Übrigen zu verbinden, ist eine Haftklebemasse 5 umlaufend neben der elektronischen Struktur 3 auf dem Substrat 2 vorgesehen. Die Haftklebemasse 5 verbindet die Abdeckung 4 mit dem Substrat 2. Durch eine entsprechend dicke Ausgestaltung ermöglicht die Haftklebemasse 5 zudem die Beabstandung der Abdeckung 4 von der elektronischen Struktur 3.

Bei der Haftklebemasse 5 handelt es sich um eine solche auf Basis von vernetzten silanmodifizierten Polymeren, wie sie vorstehend in allgemeiner Form beschrieben wurde und nachfolgend in Ausführungsbeispielen näher dargelegt ist. Die Haftklebemasse 5 übernimmt vorliegend nicht nur die Funktion des Verbindens des Substrats 2 mit der Abdeckung 4, sondern bildet zudem auch eine Barriereschicht für Permeanten bereit, um so die elektronische Struktur 2 auch von der Seite gegen Permeanten wie Wasserdampf und Sauerstoff zu kapseln.

Die Haftklebemasse 5 wird vorliegend zudem in Form eines Stanzlings aus einem doppelseitigen Klebebandes bereitgestellt. Ein derartiger Stanzling ermöglicht eine besonders einfache Applikation.

Fig. 2 zeigt eine alternative Ausgestaltung einer (opto-)elektronischen Anordnung 1. Gezeigt ist wiederum eine elektronische Struktur 3, die auf einem Substrat 2 angeordnet und durch das Substrat 2 von unten gekapselt ist. Oberhalb und seitlich von der elektronischen Struktur ist nun die Haftklebemasse 5 vollflächig angeordnet. Die elektronische Struktur 3 wird somit an diesen Stellen durch die Haftklebemasse 5 gekapselt. Auf die Haftklebemasse 5 ist sodann eine Abdeckung 4 aufgebracht. Diese Abdeckung 4 muss im Gegensatz zu der vorherigen Ausgestaltung nicht zwingend die hohen Barriereanforderungen erfüllen, da die Barriere bereits durch die Haftklebemasse bereitgestellt wird. Die Abdeckung 4 kann beispielsweise lediglich eine mechanische Schutzfunktion wahrnehmen, sie kann aber auch zusätzlich als Permeationsbarriere vorgesehen sein.

Fig. 3 zeigt eine weitere alternative Ausgestaltung einer (opto-)elektronischen Anordnung 1. Im Gegensatz zu

den vorherigen Ausgestaltungen sind nun zwei Haftklebemassen 5a, b vorgesehen, die vorliegend identisch ausgebildet sind. Die erste Haftklebemasse 5a ist vollflächig auf dem Substrat 2 angeordnet. Auf der Haftklebemasse 5a ist dann die elektronische Struktur 3 vorgesehen, die durch die Haftklebemasse 5a fixiert wird. Der Verbund aus Haftklebemasse 5a und elektronischer Struktur 3 wird dann mit der weiteren Haftklebemasse 5b vollflächig überdeckt, so dass die elektronische Struktur 3 von allen Seiten durch die Haftklebemassen 5a, b gekapselt ist. Oberhalb der Haftklebemasse 5b ist dann wiederum die Abdeckung 4 vorgesehen.

In dieser Ausgestaltung müssen somit weder das Substrat 2 noch die Abdeckung 4 zwingend Barriereeigenschaften aufweisen. Sie können aber dennoch vorgesehen sein, um die Permeation von Permeanten zur elektronischen Struktur 3 weiter einzuschränken.

Insbesondere im Hinblick auf die Fig. 2,3 wird darauf hingewiesen, dass es sich vorliegend um schematische Darstellungen handelt. Aus den Darstellungen ist insbesondere nicht ersichtlich, dass die Haftklebemasse 5 hier und vorzugsweise jeweils mit einer homogenen Schichtdicke aufgetragen wird. Am Übergang zur elektronischen Struktur bildet sich daher keine scharfe Kante, wie es in der Darstellung scheint, sondern der Übergang ist fließend und es können vielmehr kleine un- oder gasgefüllte Bereiche verbleiben. Gegebenenfalls kann jedoch auch eine Anpassung an den Untergrund erfolgen, insbesondere dann, wenn die Applikation unter Vakuum durchgeführt wird. Zudem wird die Haftklebemasse lokal unterschiedlich stark komprimiert, so dass durch Fließprozesse ein gewisser Ausgleich der Höhendifferenz an den Kantenstrukturen erfolgen kann. Auch die gezeigten Dimensionen sind nicht maßstäblich, sondern dienen vielmehr nur einer besseren Darstellung. Insbesondere die elektronische Struktur selbst ist in der Regel relativ flach ausgebildet (oft weniger als 1 μm dick).

Die Applikation der Haftklebemasse 5 erfolgt in allen gezeigten Ausführungsbeispielen in Form eines Haftklebebandes. Dabei kann es sich grundsätzlich um ein doppelseitiges Haftklebeband mit einem Träger oder um ein Transferklebeband handeln. Vorliegend ist eine Ausgestaltung als Transferklebeband gewählt.

**Beispiele**

Sofern nicht anders angegeben, sind alle Mengenangaben in den nachfolgenden Beispielen Gewichtsprozente beziehungsweise Gewichtsteile bezogen auf die Gesamtzusammensetzung.

Prüfmethoden

*Klebkraft*

Die Bestimmung der Klebkraft wurde wie folgt durchgeführt:

Als definierter Haftgrund wurde eine Stahlfläche, eine Polyethylenterephthalat- (PET) und eine Polyethylen-Platte (PE) eingesetzt. Das zu untersuchende verklebbare Flächenelement wurde auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wurde das zuvor verklebte Flächenelement in einem Winkel von 180° bei Raumtemperatur und mit 300 mm/min vom Haftgrund mit einem Zugprüfungsgerät (Firma Zwick) abgezogen und die hierfür benötigte Kraft gemessen. Der Messwert (in N/cm) ergab sich als Mittelwert aus drei Einzelmessungen.

*Shear Adhesion Failure Temperature (SAFT)*

Die Bestimmung der SAFT wurde wie folgt durchgeführt: Als definierter Haftgrund wurde eine polierte Stahlfläche eingesetzt. Das zu untersuchende verklebbare Flächenelement wurde auf eine Breite von 10 mm und eine Länge von etwa 5 cm zugeschnitten und unmittelbar danach dreimal mit einer Stahlrolle von 2 kg bei einem Vorschub von 10 m/min auf den jeweils gewählten Haftgrund mit einer Fläche von 10 x 13 mm aufgedrückt. Unmittelbar im Anschluss daran wurde das zuvor verklebte Flächenelement parallel zur Stahlfläche mit 0,5 N belastet und eine Temperaturrampe von 9°C/min gefahren. Dabei wurde die Temperatur gemessen, bei der die Probe eine Rutschstrecke von 1 mm zurückgelegt hat. Der Messwert (in °C) ergibt sich als Mittelwert aus zwei Einzelmessungen.

*Biegetest*

Für die Bestimmung der Flexibilität wurde die Klebemasse in einer Schichtdicke von 50 μm zwischen zwei 23 μm PET-Trägern beschichtet und auf einen Biegeradius von 1 mm bei einer Biegung von 180° geprüft. Bestanden ist der Test, falls es nicht zum Bruch oder Ablösen der Schicht kommt.

*Lebensdauertest*

Als ein Maß für die Bestimmung der Lebensdauer eines (opto-)elektronischen Aufbaus wurde ein Calciumtest herangezogen. Dazu wird unter Stickstoffatmosphäre eine 20 x 20 $mm^2$ große, dünne Calciumschicht auf eine Glasplatte abgeschieden. Die Dicke der Calciumschicht liegt bei etwa 100 nm. Für die Verkapselung der Calciumschicht wird ein Klebeband mit der zu testenden Klebemasse sowie einer Dünnglasscheibe (35 μm, Firma Schott) als Trägermaterial verwendet Das Klebeband wird mit einem allseitigen Rand von 3 mm über dem Calciumspiegel appliziert, in dem es direkt auf der Glasplatte haftet. Aufgrund des undurchlässigen Glasträgers des Klebebands wird nur die Permeation durch den Haftkleber ermittelt.

Der Test basiert auf der Reaktion von Calcium mit Wasserdampf und Sauerstoff, wie sie beispielsweise von A.G. Erlat et. al. in "47th Annual Technical Conference Proceedings-Society of Vacuum Coaters", 2004, Seiten 654-659, und von M. E. Gross et al. in "46th Annual Technical Conference Proceedings-Society of Vacuum Coaters", 2003, Seiten 89-92, beschrieben sind. Dabei wird die Lichttransmission der Calciumschicht überwacht, welche durch die Umwandlung in Calciumhydroxid und Calciumoxid zunimmt. Diese erfolgt beim beschriebenen Prüfaufbau vom Rand her, so dass sich die sichtbare Fläche des Calciumspiegels verringert. Es wird die Zeit bis zur Halbierung der Fläche des Calciumspiegels als Lebensdauer bezeichnet. Als Messbedingungen werden 60°C und 90 % relative Luftfeuchte gewählt. Die Muster wurden mit einer Schichtdicke der Haftklebemasse von 15 μm vollflächig und blasenfrei verklebt.

*Blasentest*

Die Klebefolie wird auf eine mit einer anorganischen Barriereschicht versehenen PET-Barrierefolie mit einer Dicke von 25 μm (WVTR = $8x10^{-2}$ $g/m^2$*d und OTR = $6x10^{-2}$ cm3/$m^2$*d*bar, entsprechend nach ASTM F-1249 und DIN 53380 Teil 3 und oben genannten Bedingungen) verklebt und bei Raumtemperatur (23°C) mit einer Gummirolle aufgerollt. Anschließend wird die zweite Seite der Klebmasse mit derselben Folie blasenfrei verklebt und ebenfalls angerollt. Nach einer Aufziehzeit von 24h wird das präparierte Muster bei 85°C und 85%rF für 20 Stunden gelagert. Untersucht wird, ob und wann in dem Verbund Blasen entstehen, sowohl die Anzahl der Blasen pro $cm^2$ als auch deren mittlere Größe wird bestimmt. Es wird die Dauer bis zum Erscheinen erster Blasen vermerkt.

*Herstellung der Muster*

Die Haftklebemassen in Beispiel 1 bis 3 wurden aus Lösung hergestellt. Dazu wurden die einzelnen Bestandteile in Toluol gelöst (Feststoffanteil 40%) und auf eine unbehandelte 23 μm PET-Folie beschichtet und bei 120 °C 15 Minuten lang getrocknet, so dass eine Klebmasseschicht mit einem Flächengewicht von 50 $g/m^2$ entstand. Für den Lebensdauertest wurden Muster in gleicher Weise erstellt, jedoch erfolgte die Beschichtung nicht auf eine PET-Folie sondern auf ein mit 1,5 $g/m^2$ silikonisiertes Trennpapier, mit einer Klebmasseschichtdicke von 15$g/m^2$.

**Beispiel 1**

| | | |
|---|---|---|
| 100 Teile | Kraton FG 1924 | Maleinsäureanhydridmodifiziertes SEBS mit 13 Gew.-% Blockpolystyrolgehalt, 36 Gew.-% Zweiblock und 1 Gew.-% Maleinsäureanhydrid der Firma Kraton |
| 1,5 Teile | Dynasilan AMEO | Aminopropyltriethoxysilan |
| 50 Teile | Escorez 5690 | Hydriertes Kohlenwasserstoffharz mit einem Erweichungspunkt von 90 °C der Firma Exxon |
| 50 Teile | Escorez 5615 | Hydriertes Kohlenwasserstoffharz mit einem Erweichungspunkt von 115 °C der Firma Exxon |
| 1 Teil | Aluminiumacetylacetonat | |

**Beispiel 2**

| | | |
|---|---|---|
| 50 Teile | Kraton FG 1924 | Maleinsäureanhydridmodifiziertes SEBS mit 13 Gew.-% Blockpolystyrolgehalt, 36 Gew.-% Zweiblock und 1 Gew.-% Maleinsäure der Firma Kraton |

(fortgesetzt)

| | | |
|---|---|---|
| 50 Teile | Kraton FG 1901 | Maleinsäureanhydridmodifiziertes SEBS mit 30 Gew.-% Blockpolystyrolgehalt, ohne Zweiblock und mit 1,7 Gew.-% Maleinsäure der Firma Kraton |
| 2,5 Teile | Dynasilan AMEO | Aminopropyltriethoxysilan |
| 70 Teile | Escorez 5615 | Hydriertes Kohlenwasserstoffharz mit einem Erweichungspunkt von 115 °C der Firma Exxon |
| 25 Teile | Ondina 917 | Weißöl aus paraffinischen und naphthenischen Anteilen der Firma Shell |
| 1,5 Teile | Aluminiumacetyl aceton at | |

**Beispiel 3**

| | | |
|---|---|---|
| 50 Teile | Oppanol B 150 | Hochmolekulares Polyisobutylen der Firma BASF |
| 50 Teile | Oppanol B 15 | Niedermolekulares Polyisobutylen der Firma BASF |
| 10 Teile | Isobam 06 | Alternierendes Copolymer aus Isobutylen und Maleinsäureanhydrid mit einem $M_w$ von ca. 85.000 g/mol der Firma Kuraray |
| 4 Teile | Dynasilan AMEO | Aminopropyltriethoxysilan |
| 100 Teile | Regalite R 1100 | Hydriertes Kohlenwasserstoffharz mit einem Erweichungspunkt von 100 °C der Firma Eastman |
| 1,5 Teile | Aluminiumacetylacetonat | |

**Beispiel 4**

| | | |
|---|---|---|
| 50 Teile | Kraton FG 1924 | Maleinsäureanhydridmodifiziertes SEBS mit 13 Gew.-% Blockpolystyrolgehalt, 36 Gew.-% Zweiblock und 1 Gew.-% Maleinsäure der Firma Kraton |
| 50 Teile | Kraton FG 1901 | Maleinsäureanhydridmodifiziertes SEBS mit 30 Gew.-% Blockpolystyrolgehalt, ohne Zweiblock und mit 1,7 Gew.-% Maleinsäure der Firma Kraton |
| 2,5 Teile | Dynasilan AMEO | Aminopropyltriethoxysilan |
| 70 Teile | Escorez 5615 | Hydriertes KW-Harz mit einem Erweichungspunkt von 115 °C der Firma Exxon |
| 25 Teile | Ondina 917 | Weißöl aus paraffinischen und naphthenischen Anteilen der Firma Shell |
| 1,5 Teil | Araldite MY 721 | Epoxidharz auf Basis 4,4'-Methylenebis(N,N-diglycidylanilin) der Firma Huntsman |

Bei diesem Beispiel muss die Klebmasse zur Vernetzung 10 min auf 120 °C erhitzt werden. Dieses geschieht sinnvollerweise nach der Verklebung. Da bei diesen Temperaturen das Polyethylen bei der Klebkraftmessung schmilzt, wurden keine Werte ermittelt.

Die anderen Klebwerte sind durch das sehr viel bessere Auffließen bei den hohen Temperaturen natürlich höher als bei den anderen Klebmassen, die nicht erhitzt werden.

Referenzbeispiel 5

| | | |
|---|---|---|
| 50 Teile | Kraton FG 1924 | Maleinsäureanhydridmodifiziertes SEBS mit 13 Gew.-% Blockpolystyrolgehalt, 36 Gew.-% Zweiblock und 1 Gew.-% Maleinsäure der Firma Kraton |
| 50 Teile | Kraton FG 1901 | Maleinsäureanhydridmodifiziertes SEBS mit 30 Gew.-% Blockpolystyrolgehalt, ohne Zweiblock und mit 1,7 Gew.-% Maleinsäure der Firma Kraton |
| 2,5 Teile | Dynasilan AMEO | Aminopropyltriethoxysilan |
| 20 Teile | Escorez 5615 | Hydriertes KW-Harz mit einem Erweichungspunkt von 115 °C der Firma Exxon |
| 1,5 Teile | Aluminiumacetyl aceton at | |

Dieses Beispiel ist kein Haftkleber sondern ein Schmelzkleber, der erst erwärmt werden muss, um zu kleben. Für die Messungen wurde er 5 s auf 80 °C erwärmt während des Verklebens.

**Vergleichsbeispiel V6**

| | | |
|---|---|---|
| 100 Teile | Kraton G 1657 | Unmodifiziertes SEBS mit 13 Gew.-% Blockpolystyrolgehalt, 36 Gew.-% Zweiblock der Firma Kraton |
| 50 Teile | Escorez 5690 | Hydriertes Kohlenwasserstoffharz mit einem Erweichungspunkt von 90 °C der Firma Exxon |
| 50 Teile | Escorez 5615 | Hydriertes Kohlenwasserstoffharz mit einem Erweichungspunkt von 115 °C der Firma Exxon |

**Vergleichsbeispiel V7**

| | | |
|---|---|---|
| 100 Teile | Kraton FG 1924 | Maleinsäureanhydridmodifiziertes SEBS mit 13 Gew.-% Blockpolystyrolgehalt, 36 Gew.-% Zweiblock und 1 Gew.-% Maleinsäure der Firma Kraton |
| 50 Teile | Escorez 5690 | Hydriertes Kohlenwasserstoffharz mit einem Erweichungspunkt von 90 °C der Firma Exxon |
| 50 Teile | Escorez 5615 | Hydriertes Kohlenwasserstoffharz mit einem Erweichungspunkt von 115 °C der Firma Exxon |

**Vergleichsbeispiel V8**

| | | |
|---|---|---|
| 100 Teile | Kraton FG 1924 | Maleinsäureanhydridmodifiziertes SEBS mit 13 Gew.-% Blockpolystyrolgehalt, 36 Gew.-% Zweiblock und 1 Gew.-% Maleinsäure der Firma Kraton |
| 1,5 Teile | Dynasilan AMEO | Aminopropyltriethoxysilan |
| 50 Teile | Escorez 5690 | Hydriertes Kohlenwasserstoffharz mit einem Erweichungspunkt von 90 °C der Firma Exxon |
| 50 Teile | Escorez 5615 | Hydriertes Kohlenwasserstoffharz mit einem Erweichungspunkt von 115 °C der Firma Exxon |

**Vergleichsbeispiel V9**

| | | |
|---|---|---|
| 100 Teile | Kraton FG 1924 | Maleinsäureanhydridmodifiziertes SEBS mit 13 Gew.-% Blockpolystyrolgehalt, 36 Gew.-% Zweiblock und 1 Gew.-% Maleinsäure der Firma Kraton |
| 50 Teile | Escorez 5690 | Hydriertes Kohlenwasserstoffharz mit einem Erweichungspunkt von 90 °C der Firma Exxon |
| 50 Teile | Escorez 5615 | Hydriertes Kohlenwasserstoffharz mit einem Erweichungspunkt von 115 °C der Firma Exxon |
| 1 Teil | Aluminiumacetylacetonat | |

**Vergleichsbeispiel V10**

| | | |
|---|---|---|
| 50 Teile | Oppanol B 150 | Hochmolekulares Polyisobutylen der Firma BASF |
| 50 Teile | Oppanol B 15 | Niedermolekulares Polyisobutylen der Firma BASF |
| 100 Teile | Regalite R 1100 | Hydriertes Kohlenwasserstoffharz mit einem Erweichungspunkt von 100 °C der Firma Eastman |

Ergebnisse:

Zur klebtechnischen Beurteilung der oben genannten Beispiele wurden zunächst die Klebkraft, der SAFT-Test und der Test auf Flexibilität durchgeführt.

Tabelle 1

| | Klebkraft [N/cm] Stahl / PET/ PE | SAFT [°C] | Biegetest |
|---|---|---|---|
| Beispiel 1 | 6,1 / 5,7 / 3,2 | 180 | bestanden |
| Beispiel 2 | 4,9 / 4,1 / 2,7 | 180 | bestanden |
| Beispiel 3 | 3,4 / 3,0 / 1,6 | 153 | bestanden |
| Beispiel 4 | 8,4 / 6,9 / -- | 180 | bestanden |
| Referenzbeispiel 5 | 9,4 / 8,2 / 4,4 | 180 | bestanden |
| V6 | 6,7 / 6,2 / 3,3 | 68 | bestanden |
| V7 | 5,9 / 5,7 / 3,2 | 75 | bestanden |
| V8 | 5,7 / 5,7 / 3,5 | 73 | bestanden |
| V9 | 5,7 / 5,2 / 3,1 | 180 | bestanden |
| V10 | 3,6 / 3,2 / 1,5 | 52 | bestanden |

Wie zu erkennen ist, konnten zwar in allen Beispielen ausreichend hohe Klebkräfte erzielt werden, mit den Blockcopolymeren höhere als mit den Polyisobutylenen, allerdings war der SAFT nur dann ausreichend, wenn eine Vernetzung stattgefunden hat.

Ergebnisse des Lebensdauer- und des Blasentests:

Tabelle 2

| | Lebensdauer [h] | Blasentest |
|---|---|---|
| Beispiel 1 | 630 | Keine Blasen nach 14 Tagen |
| Beispiel 2 | 670 | Keine Blasen nach 14 Tagen |
| Beispiel 3 | 520 | Keine Blasen nach 14 Tagen |
| Beispiel 4 | 620 | Keine Blasen nach 14 Tagen |
| Referenzbeispiel 5 | 710 | Keine Blasen nach 14 Tagen |
| V6 | 280 | Erste Blasen nach 4h |
| V7 | 260 | Erste Blasen nach 4h |
| V8 | 580 | Erste Blasen nach 4h |

(fortgesetzt)

| | Lebensdauer [h] | Blasentest |
|---|---|---|
| V9 | 390 | Keine Blasen nach 14 Tagen |
| V10 | 740 | Erste Blasen nach 2h |

Die Lebensdauertests der erfindungsgemäßen Klebmassen zeigen bessere Ergebnisse als Muster ohne Silanmodifizierung. Im Blasentest zeigt sich eine deutliche Verbesserung durch die Vernetzung, auch in Vergleichsbeispiel 9 ohne Silanmodifizierung.

## Patentansprüche

1. Haftklebmasse enthaltend

   I. ein silanmodifiziertes Polymer entstanden aus der Reaktion

   a. eines Säureanhydridgruppen enthaltenden Polymers mit
   b. einem Silan der folgenden Formel

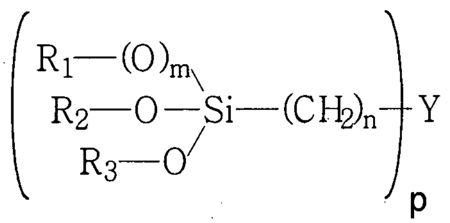

   mit
   $R_1$, $R_2$, $R_3$ unabhängig voneinander gewählt aus der Gruppe Methyl, Ethyl, 2-Methoxyethyl, i-Propyl, Butyl
   m = 0 oder 1 .
   n = 0 bis 12
   p = 1 oder 2
   und
   für p = 1
   Y = einer funktionellen Gruppe gewählt aus der Gruppe
   Glycidyl, Glycidyloxy, Isocyanato, $-NH-CH_2-CH_2-NR_4R_5$, $-NR_4R_5$ (mit $R_4$ und $R_5$ unabhängig voneinander gewählt aus der Gruppe H, Alkyl, Phenyl, Benzyl, Cyclopentyl, Cyclohexyl), SH
   oder
   für p = 2
   Y = NH

   II. und enthaltend einen Vernetzer

2. Klebmasse nach Anspruch 1,
   **dadurch gekennzeichnet, dass**
   es sich bei dem Säureanhydridgruppen enthaltenden Polymer um ein mit Anhydridgruppen modifiziertes Polymer handelt.

3. Klebmasse nach Anspruch 1 oder 2,
   **dadurch gekennzeichnet, dass**
   es sich bei dem Säureanhydridgruppen enthaltenden Polymer um ein Copolymer handelt, bei dem Anhydridgruppen haltige Monomere mit in die Polymerkette eingebaut sind.

4. Klebmasse nach zumindest einem der Ansprüche 1 bis 3,
   **dadurch gekennzeichnet, dass**
   es sich bei dem Vernetzer um ein Metallchelat nach folgender Formel handelt

$(R_1O)_nM(XR_2Y)_m$,

wobei

M ein Metall der 2., 3., 4. oder 5. Hauptgruppe oder ein Übergangsmetall ist,
$R_1$ eine Alkyl- oder Arylgruppe wie Methyl, Ethyl, Butyl, Isopropyl oder Benzyl ist,
n null oder eine größere ganze Zahl ist,
X, Y Sauerstoff oder Stickstoff sind, die jeweils auch durch eine Doppelbindung an $R_2$ gebunden sein können;
$R_2$ eine X und Y verbindende Alkylengruppe ist, die verzweigt sein kann, oder auch Sauerstoff oder weitere Heteroatome in der Kette enthalten kann;
m eine ganze Zahl, mindestens jedoch 1 ist.

5. Klebmasse nach zumindest einem der vorherigen Ansprüche,
**dadurch gekennzeichnet, dass**
es sich bei dem Vernetzer um eine Epoxidverbindung handelt.

6. Klebmasse nach zumindest einem der Ansprüche 1 bis 5,
**dadurch gekennzeichnet, dass**
es sich bei dem Polymer um ein modifiziertes Vinylaromatenblockcopolymer handelt.

7. Verfahren zur Kapselung einer elektronischen Anordnung gegen Permeanten, bei dem eine Haftklebmasse nach zumindest einem der vorherigen Ansprüche bereitgestellt wird und bei dem die Haftklebemasse auf und/oder um die zu kapselnden Bereiche der elektronischen Anordnung appliziert wird.

8. Verfahren nach Anspruch 7,
**dadurch gekennzeichnet, dass**
die Haftklebemasse und/oder die zu kapselnden Bereiche der elektronischen Anordnung vor, während und/oder nach der Applikation der Haftklebemasse erwärmt werden.

9. Elektronische Anordnung mit einer elektronischen Struktur, insbesondere einer organischen elektronischen Struktur, und einer Haftklebmasse nach zumindest einem der vorherigen Ansprüche, wobei die elektronische Struktur zumindest teilweise durch die Haftklebmasse gekapselt ist.

## Claims

1. Pressure-sensitive adhesive comprising

I. a silane-modified polymer produced from the reaction

a. of a polymer comprising anhydride groups with
b. a silane of the following formula

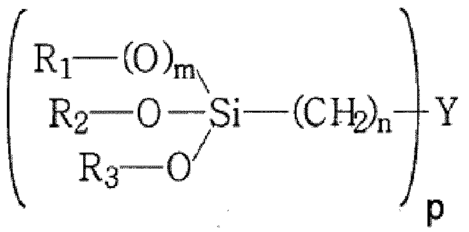

where

$R_1$, $R_2$ and $R_3$ are selected mutually independently from the group of methyl, ethyl, 2-methoxyethyl, isopropyl, butyl
m = 0 or 1

n = from 0 to 12
p = 1 or 2
and
for p = 1
Y = a functional group selected from the group of glycidyl, glycidyloxy, isocyanato, $-NH-CH_2-CH_2-NR_4R_5$, $-NR_4R_5$ (where $R_4$ and $R_5$ are selected mutually independently from the group of H, alkyl, phenyl, benzyl, cyclopentyl, cyclohexyl), SH
or
for p = 2
Y = NH

II. and comprising a crosslinking agent.

**2.** Adhesive according to Claim 1,
**characterized in that**
the polymer comprising anhydride groups is a polymer modified by anhydride groups.

**3.** Adhesive according to Claim 1 or 2,
**characterized in that**
the polymer comprising anhydride groups is a copolymer in which monomers containing anhydride groups have been incorporated concomitantly into the polymer chain.

**4.** Adhesive according to at least one of Claims 1 to 3,
**characterized in that**
the crosslinking agent is a metal chelate of the following formula

$$(R_1O)_nM(XR_2Y)_m$$

where

M is a metal of the 2nd, 3rd, 4th or 5th Main Group, or is a transition metal,
$R_1$ is an alkyl or aryl group, for example methyl, ethyl, butyl, isopropyl or benzyl,
n is zero or a larger integer,
X and Y are oxygen or nitrogen, each of which can also have bonding to $R_2$ via a double bond,
$R_2$ is an alkylene group which connects X and Y and which can have branching, or else can comprise oxygen or other heteroatoms in the chain,
m is an integer which is at least 1.

**5.** Adhesive according to at least one of the preceding claims,
**characterized in that**
the crosslinking agent is an epoxy compound.

**6.** Adhesive according to at least one of Claims 1 to 5,
**characterized in that**
the polymer is a modified vinylaromatic block copolymer.

**7.** Process for the encapsulation of an electronic arrangement in order to exclude permeants, in which an adhesive according to at least one of the preceding claims is provided and in which the adhesive is applied onto and/or around those regions of the electronic arrangement that are to be encapsulated.

**8.** Process according to Claim 7,
**characterized in that**
the adhesives and/or those regions of the electronic arrangement that are to be encapsulated are heated before, during and/or after the application of the pressure-sensitive adhesive.

**9.** Electronic arrangement with an electronic structure, in particular with an organic electronic structure, and with a pressure-sensitive adhesive according to at least one of the preceding claims, where the electronic structure has been at least to some extent encapsulated by use of the pressure-sensitive adhesive.

**Revendications**

1. Masse adhésive de contact contenant :

   I. un polymère modifié au silane formé par la réaction de

      a. un polymère contenant des groupes anhydride d’acide avec
      b. un silane de la formule générale

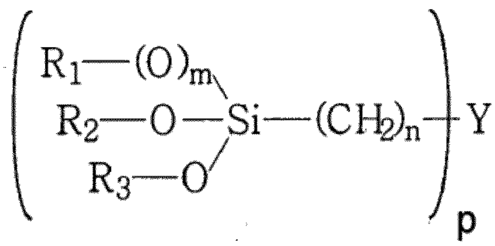

avec

$R_1$, $R_2$, $R_3$ choisis indépendamment les uns des autres dans le groupe constitué par méthyle, éthyle, 2-méthoxyéthyle, i-propyle, butyle,
m = 0 ou 1,
n = 0 à 12,
p = 1 ou 2,
et
pour p = 1,
Y = un groupe fonctionnel choisi dans le groupe constitué par glycicyle, glycidyloxy, isocyanato, -NH-$CH_2$-$CH_2$-$NR_4R_5$, -$NR_4R_5$ (avec $R_4$ et $R_5$ choisis indépendamment l’un de l’autre dans le groupe constitué par H, alkyle, phényle, benzyle, cyclopentyle, cyclohexyle), SH,
ou
pour p = 2,
Y = NH,

   II. et contenant un agent de réticulation.

2. Masse adhésive selon la revendication 1, **caractérisée en ce que** le polymère contenant des groupes anhydride d’acide est un polymère modifié avec des groupes anhydride.

3. Masse adhésive selon la revendication 1 ou 2, **caractérisée en ce que** le polymère contenant des groupes anhydride d’acide est un copolymère dans lequel des monomères contenant des groupes anhydride sont incorporés dans la chaîne polymère.

4. Masse adhésive selon au moins l’une quelconque des revendications 1 à 3, **caractérisée en ce que** l’agent de réticulation est un chélate de métal de la formule suivante :

$$(R_1O)_nM(XR_2Y)_m,$$

dans laquelle

M est un métal du groupe principal 2, 3, 4 ou 5 ou un métal de transition,
$R_1$ est un groupe alkyle ou aryle, tel que méthyle, éthyle, butyle, isopropyle ou benzyle,
n représente zéro ou un nombre entier plus élevé,
X, Y sont l’oxygène ou l’azote, qui peuvent chacun également être reliés à $R_2$ par une double liaison,
$R_2$ est un groupe alkylène reliant X et Y, qui peut être ramifié, ou qui peut également contenir de l’oxygène ou d’autres hétéroatomes dans la chaîne,
m est un nombre entier, au moins toutefois 1.

5. Masse adhésive selon au moins l'une quelconque des revendications précédentes, **caractérisée en ce que** l'agent de réticulation est un composé d'époxyde.

6. Masse adhésive selon au moins l'une quelconque des revendications 1 à 5, **caractérisée en ce que** le polymère est un copolymère séquencé de composé aromatique de vinyle modifié.

7. Procédé d'encapsulation d'un dispositif électronique contre les perméants, selon lequel une masse adhésive de contact selon au moins l'une quelconque des revendications précédentes est préparée et selon lequel la masse adhésive de contact est appliquée sur et/ou autour des zones à encapsuler du dispositif électronique.

8. Procédé selon la revendication 7, **caractérisé en ce que** la masse adhésive de contact et/ou les zones à encapsuler du dispositif électronique sont chauffées avant, pendant et/ou après l'application de la masse adhésive de contact.

9. Dispositif électronique contenant une structure électronique, notamment une structure électronique organique, et une masse adhésive de contact selon au moins l'une quelconque des revendications précédentes, la structure électronique étant au moins partiellement encapsulée par la masse adhésive de contact.

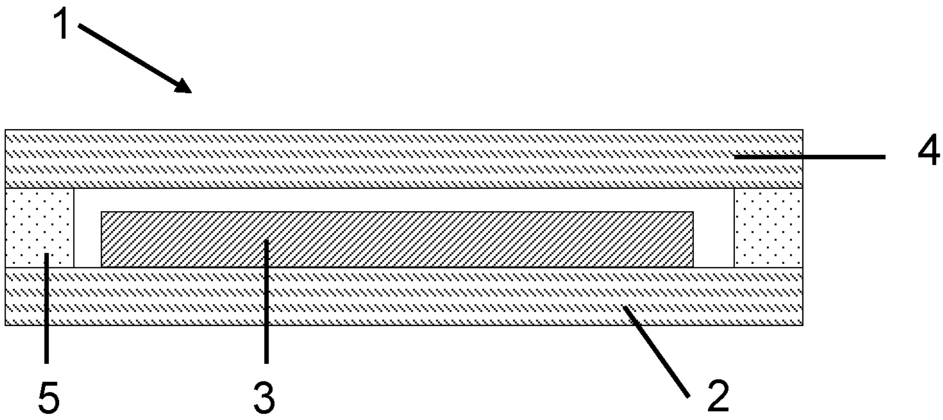


Fig. 1

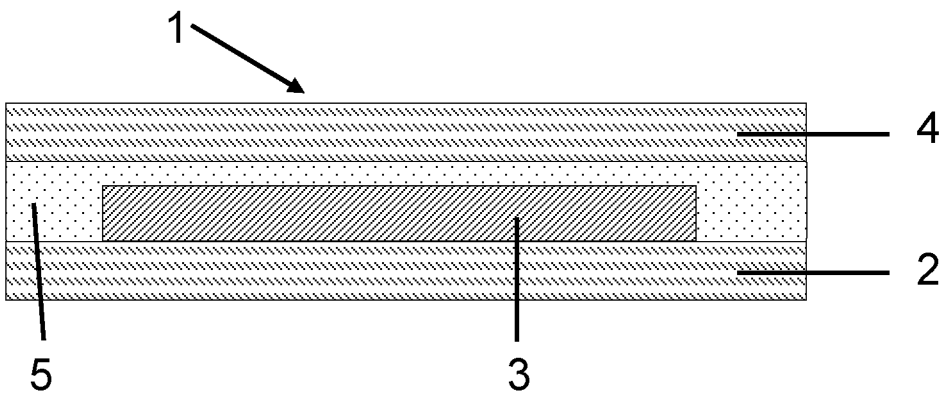


Fig. 2

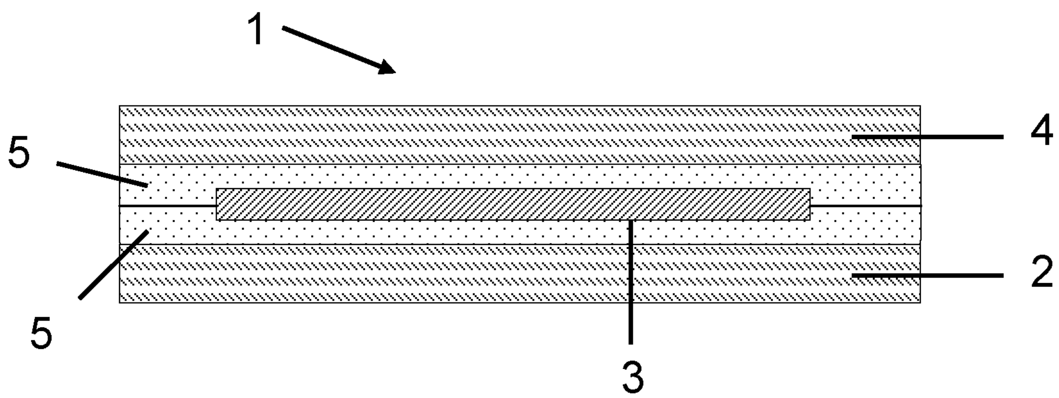


Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9821287 A1
- US 4051195 A
- US 4552604 A
- US 20040225025 A1
- US 20060100299 A1
- WO 2007087281 A1
- DE 102008047964 A1
- DE 102009036968 A1
- DE 102009036970 A1
- US 6833668 B1
- JP 2000311782 A
- EP 1037192 A2
- WO 03065470 A1
- JP 2004296381 A
- US 5591379 A
- US 5304419 A
- EP 1311559 B1
- US 20070135552 A1
- WO 02026908 A1


### In der Beschreibung aufgeführte Nicht-Patentliteratur


- **A.G. ERLAT.** *47th Annual Technical Conference Proceedings-Society of Vacuum Coaters,* 2004, 654-659
- **M. E. GROSS et al.** *46th Annual Technical Conference Proceedings-Society of Vacuum Coaters,* 2003, 89-92